# EUROPEAN PATENT SPECIFICATION

(11) **EP 1 383 279 B1**
(45) Date of publication and mention of the grant of the patent: **25.06.2008**
(21) Application number: 03002104.2
(22) Date of filing: 30.01.2003
(51) Int. Cl.: H04L 12/28, H04N 7/173

(54) **Method and device for controlling capture device via LAN**
Vorrichtung und Verfahren zur Steuerung eines Aufzeichnungsgerätes über ein LAN
Dispositif et méthode de contrôle d'un dispositif d'enregistrement via un réseau local

(30) Priority: 18.07.2002 JP 2002210129
(43) Date of publication of application: 21.01.2004
(73) Proprietor: FUJITSU LIMITED, Kawasaki-shi, Kanagawa 211-8588 (JP)
(72) Inventor: Hasegawa, Eiji, Fujitsu Limited, Kawasaki-shi, Kanagawa 211-8588 (JP); Sonoda, Toshihiro, Fujitsu Limited, Kawasaki-shi, Kanagawa 211-8588 (JP); Honda, Fumio, Fujitsu Limited, Kawasaki-shi, Kanagawa 211-8588 (JP)
(74) Representative: Sunderland, James Harry

(56) References cited:
- WO-A-00/11871
- WO-A-01/95621
- US-A- 5 794 217
- US-A1- 2002 056 102
- PATENT ABSTRACTS OF JAPAN vol. 2002, no. 09, 4 September 2002 (2002-09-04) & JP 2002 140541 A (ADC TECHNOLOGY KK), 17 May 2002 (2002-05-17)

## Description

### FIELD OF THE INVENTION

The present invention relates to receiving, recording and delivering a broadcast program to user devices via a local area network (LAN), and more particularly to a shared system for receiving, recording, and delivering a broadcast program to user devices via a LAN.

### BACKGROUND OF THE INVENTION

In a common condominium, a receiving antenna is shared by a plurality of households via a distribution cable, and each user couples tuners of a recording and reproducing device and a television apparatus to the distribution cable. The user can record only one broadcast program by using one recording and reproducing device.

In Japanese Unexamined Patent Publication No. 11-112562 (A), Fukazawa et al. discloses a technique in which a conversion server converts the protocol of video data received from a video server into an HTTP protocol for a client, and the converted video data is transmitted to the client.

In Japanese Unexamined Patent Publication No. 2001-344271 (A), Takemura discloses a technique in which a stream data reproducing device collects stream data from other computers in accordance with selected states of each user and stores the collected data into storage means for the user, and the stream data stored in the storage means for the user is delivered to a computer of the user in response to a request of the user.

In Japanese Unexamined Patent Publication No. 2002-101370 (A), Iwamoto discloses a technique in which a server is connected to terminals of users via the Internet, different broadcast program data received from a tuner unit is collectively recorded in response to requests for recording from the terminals of the users, and the program data is delivered to the terminal of the user in response to a request for viewing from the terminal. However, one tuner can not simultaneously receive different programs on different channels.

The inventors have recognized that it is advantageous that a plurality of devices or terminals of a plurality of users share a plurality of broadcast program capture devices and a broadcast program storage device, by interconnecting, via a LAN, the plurality of broadcast program capture devices, the broadcast program storage device and the plurality of devices or terminals.

It is an object of the invention to enable a broadcast program capture device and a broadcast program storage device to be shared by devices of a plurality of users.

WO 01/95621 discloses a device and a method for recording and playing video signals.

Aspects of the invention are defined in the independent claims, reference to which should now be made. Preferred embodiments are defined in the dependent claims.

According to the invention, a broadcast program capture device and a broadcast program storage device can be shared by devices of a plurality of users. The required number of broadcast program capture devices and the required number of broadcast program storage devices can be connected to a LAN. The plurality of broadcast program capture devices and the plurality of broadcast program storage devices can be distributed on the LAN at different locations.

Throughout the drawings, similar symbols and numerals indicate similar items and functions.

### BRIEF DESCRIPTION OF THE DRAWINGS

FIGURE 1 shows the configuration of a local area network (LAN) in accordance with an embodiment of the present invention;
FIGURE 2 shows the configuration of a LAN in accordance with another embodiment of the invention;
FIGURE 3 shows the configuration of a LAN in accordance with a further embodiment of the invention;
FIGURE 4 shows the configuration of a LAN in accordance with a still further embodiment of the invention;
FIGURE 5 shows the configuration of a capture device shown in FIGURES 1 to 4.
FIGURE 6 shows the configuration of the storage device shown in FIGURES 1 to 4;
FIGURE 7 shows the configuration of a control device shown in FIGURES 1 and 2;
FIGURE 8 shows the configuration of a reproduction and display device shown in FIGURES 2 and 4;
FIGURES 9A and 9B show relations between a command from the control device and replies from the capture devices and the storage devices;
FIGURE 10A shows an example of a command for searching for a capture device by the control device;
FIGURE 10B shows an example of a reply described in the XML from the capture device;
FIGURE 11A shows delivery of an electronic program guide (EPG) by the capture device;
FIGURE 11B shows an example of a conversion table;
FIGURE 11C shows an example of EPG data delivered to the control device;
FIGURE 12A shows an example of an EPG displayed on a display device or a terminal;
FIGURE 12B shows an example of a list of recorded programs which is produced by the storage device;
FIGURES 13A and 13B show control signals for controlling the capture device and the storage device by the control of the control device in accordance with a request by a user;
FIGURE 14 is a flowchart for controlling a capture device that is executed by the control device, as shown in FIGURE 13A;
FIGURE 15 is a flowchart for controlling the storage device that is executed by the control device, as shown in FIGURE 13A;
FIGURE 16 is a flowchart for reserving the capture device for use that is executed by the control device, as shown in FIGURE 13A;
FIGURE 17 is a flowchart for reserving the storage device for use that is executed by the control device, as shown in FIGURE 13A;
FIGURE 18 is a flowchart for presenting a program that is executed by the control device, as shown in FIGURE 13B;
FIGURE 19 is a flowchart for reserving the capture device for use and rearranging the reservations depending on the receiving channels of the capture devices that is executed by the control device, as shown in FIGURE 13B;
FIGURE 20 shows an example of a procedure for changing storage devices for recording a data stream of a program, performed between one storage device and another storage device;
FIGURE 21 is a flowchart for switching the storage devices for recording a data stream of a broadcast program that is executed by the storage device;
FIGURE 22 shows the configuration of a content server shown in FIGURES 3 and 4;
FIGURE 23 is a flowchart for receiving requests for reservations of recording broadcast programs from the plurality of user terminals that is executed by a server function of the content server; and
FIGURE 24 shows an example of a list of reservations stored in a reservation file.

### DESCRIPTION OF PREFERRED EMBODIMENTS

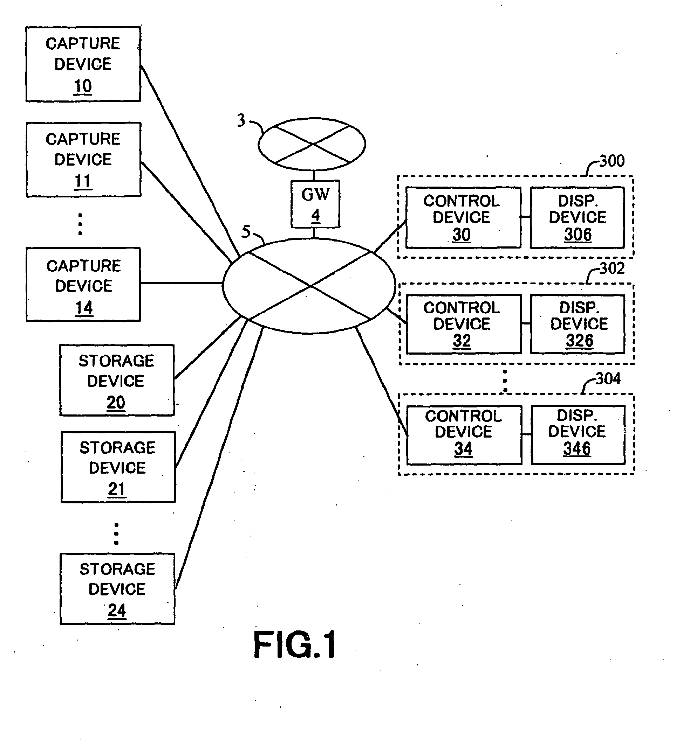

FIGURE 1 shows a plurality of capture devices 10, 11, ... and 14 for capturing data streams of broadcast programs from external sources of signals, such as an antenna for the terrestrial broadcast, an antenna dish for the satellite broadcast and a cable for the cable television (CATV) system, a plurality of storage devices 20, 21, ... and 24 for storing or recording signals captured by the capture devices 10 to 14, and users' control devices 30, 32, ... and 34 coupled to respective display devices 306, 326, ... and 346, all of which are connected to a local area network (LAN) 5 provided in an area, such as a condominium, in accordance with an embodiment of the present invention. The LAN 5 may be a network of any kind on which connection can be provided in accordance with the Internet protocol (IP), for example, Ethernet® , a wireless LAN, or a power-line carrier bus. The LAN 5 is connected to an external network 3, such as the Internet, via a gateway 4. A set 300 of the control device 30 and the display device 306, a set 302 of the control device 32 and the display device 326, ... and a set 304 of the control device 34 and the display device 346 are installed in respective households of the users. Each of the control devices 30 to 34 may be a dedicated unit, a set-top box or a personal computer (PC). The display devices 306 to 346 may be television apparatuses. Alternatively, each of the sets 300 to 304 may be included in one personal computer (PC).

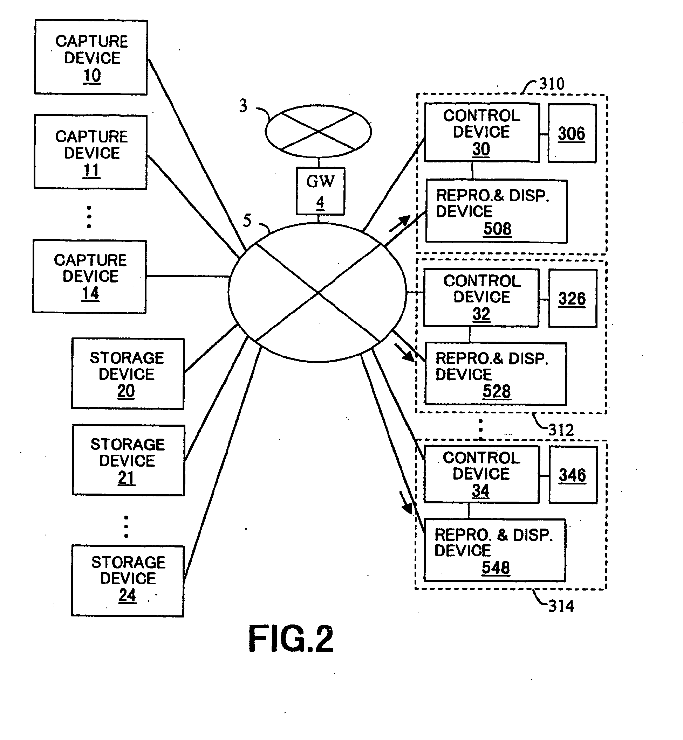

FIGURE 2 shows a plurality of capture devices 10, 11, ... and 14, a plurality of storage devices 20, 21, ... and 24, users' control devices 30, ... and 34 coupled to respective display devices 306, 326 ... and 346, and reproduction and display devices 508, 528, ... and 548 for reproducing a data stream for display, all of which are connected to a LAN 5, in accordance with another embodiment of the invention. The LAN 5 is connected to an external network 3 via a gateway 4. A set 310 of the control device 30, the display device 306 and the reproduction and display device 508, a set 312 of the control device 32, the display device 326 and the reproduction and display device 528, ... and a set 314 of the control device 34, the display device 346 and the reproduction and display device 548 are installed in the respective households of the users. In place of the display devices 306 to 346, the reproduction and display devices 508 to 548 may be used. Each of the control devices 30 to 34 may be a dedicated unit, or a PC. Each of the reproduction and display devices 508 to 548 may be a combination of a set-top box connected to the LAN 5, and a television apparatus.

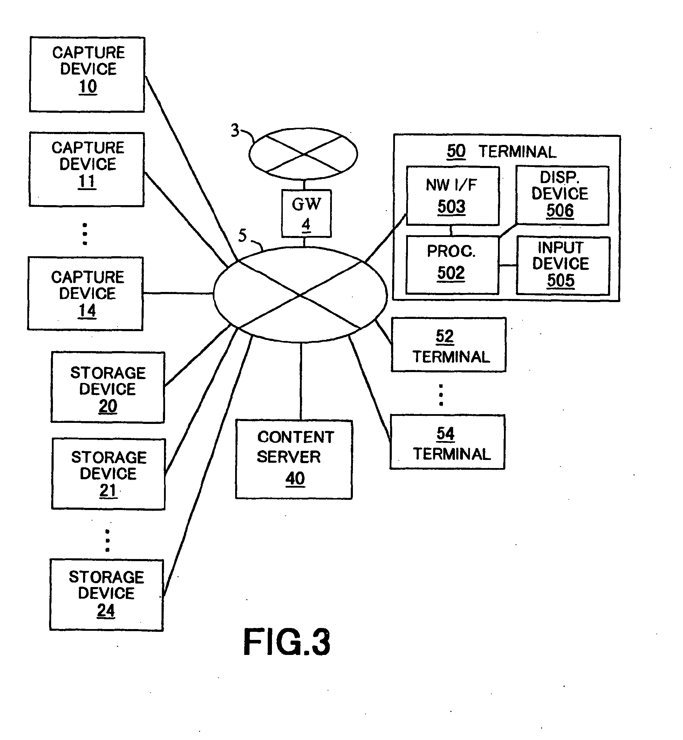

FIGURE 3 shows a plurality of capture devices 10, 11, ... and 14, a plurality of storage devices 20, 21, ... and 24, a content server or a central control device 40 which manages the capture devices 10 to 14 and the storage devices 20 to 24, and users' terminals 50, 52, ... and 54, all of which are connected to a LAN 5. in accordance with a further embodiment of the invention. The LAN 5 is connected to an external network 3 via a gateway 4. Each of the users' terminals 50, 52, ... and 54 includes: a processor 502 for controlling internal components and modules and generating a network command; a network interface (NW I/F) 503; an input device 505, such as a keyboard and a mouse; and a display device 506. The terminals 50 to 54 are installed in the respective households of the users. The terminals 50 to 54 may be PCs or television apparatuses.

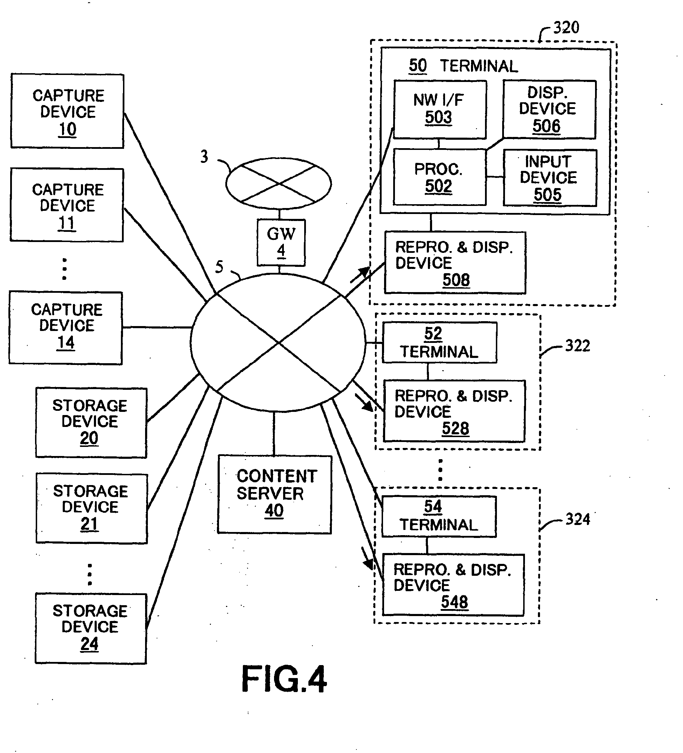

FIGURE 4 shows a plurality of capture devices 10, 11, ... and 14, a plurality of storage devices 20, 21, ... and 24, a content server or a central control device 40 which manages the capture devices 10 to 14 and the storage devices 20 to 24, users' terminals 50, 52, ... and 54, and reproduction and display devices 508 , 528, ... and 548, all of which are connected to a LAN 5, in accordance with a still further embodiment of the invention. The LAN 5 is connected to an external network 3 via a gateway 4. Each of the users' terminals 50, 52, ... and 54 includes: a processor 502 for controlling internal components and modules and generating a network command; a network interface (NW I/F) 503; an input device 505, such as a keyboard and a mouse; and a display device 506. A set 320 of the terminal 50 and the reproduction and display device 508, a set 322 of the terminal device 52 and the reproduction and display device 528, ... and a set 324 of the terminal 54 and the reproduction and display device 548 are installed in the respective households of the users. The terminals 50 to 54 may be a PC or a PDA (Personal Digital Assistant). Each of the reproduction and display devices 508 to 548 may be a combination of a set-top box connected to the LAN 5 and a television apparatus.

According to the embodiments, different broadcast programs from the two or more capture devices can be simultaneously recorded in the one storage device, or one broadcast program can be divided and recorded in the two or more storage devices.

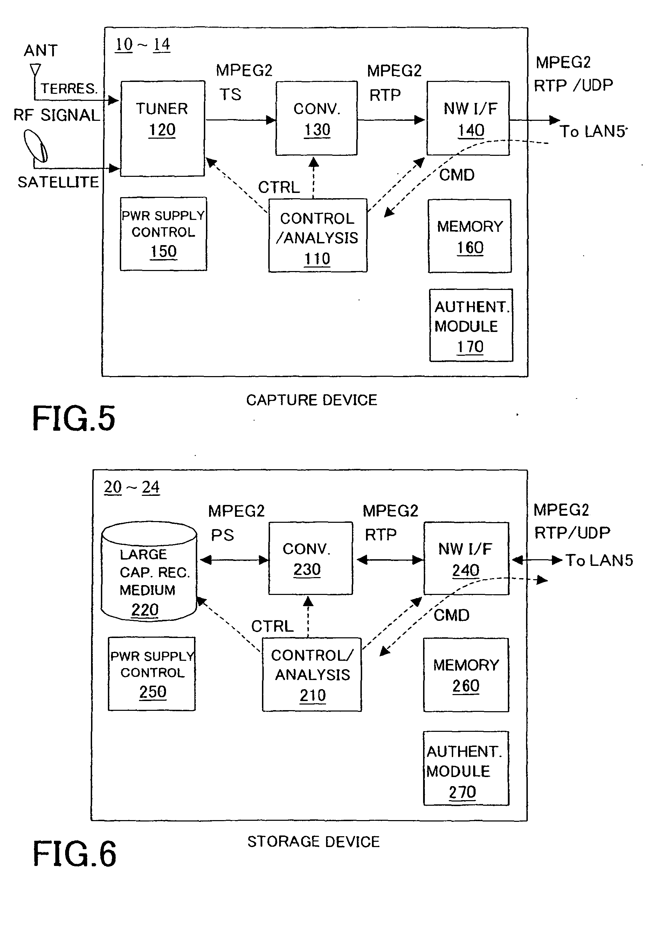

FIGURE 5 shows the configuration of each of the capture devices 10 to 14 in FIGURES 1 to 4. Each of the capture devices 10 to 14 includes: a controller and analyzer module 110 for controlling internal components and modules; a tuner 120 which is coupled to external signal sources such as an antenna for receiving a terrestrial broadcast signal, an antenna dish for receiving a satellite broadcast signal, and/or a cable for receiving a CATV signal; a protocol converter 130 which converts protocols of data streams; a network interface (NW I/F) 140 which is connected to the LAN 5; a power supply control device 150; a memory 160; and an authentication module 170. The controller/analyzer 110, the converter 130 and the authentication module 170 are implemented on the processor in the form of hardware or software.

In response to a command (CMD) which is received via the LAN 5, the controller/analyzer 110 controls the tuner 120, the converter 130, and the network interface 140 to derive a desired data stream in a broadcast format from a received RF signal and causes the derived data stream to be converted in terms of protocol into a data stream in a transmission format, so as to provide, via the LAN 5, the converted data stream to the storage devices 20 to 24, the control devices 30 to 34, and the terminals 50 to 54 or the reproduction/display devices 508 to 548. The tuner 120 down-converts a desired RF signal on a desired channel into an IF signal, then down-converts the IF signal into a base band signal, then demodulates the base band signal, then decrypts or descrambles the demodulated signal, if necessary, and decodes the resultant signal to reproduce the broadcast data stream. In order to deliver an encrypted broadcast program to the control devices 30 to 34, the controller/analyzer 110 may transmit an encrypted key for decryption or descrambling to authorized ones of the control devices 30 to 34, the terminals 50 to 54, or the reproduction and display devices 508 to 548.

The capture devices 10 to 14 receive a data stream in the broadcast format of MPEG2-TS, and transmit a data stream in the LAN transmission format of MPEG2-TS/RTP. The converter 130 converts a data stream in the broadcast format into a data stream in the LAN transmission format. The controller and analyzer 110 can cause the converter 130 to convert the bit rate of the received data stream into one of a plurality of bit rates having different picture qualities and/or sound qualities in accordance with a request by a receiving device, which may be the control device, the terminal or the reproduction and display device for example, to deliver the data stream at the converted bit rate.

The memory 160 stores information related to the identification and address of a corresponding capture device, the identification, the date and the period of time of a broadcast program, current and reserved tuned channels, the ID of a user who has made the reservation, the identification and address of the control device or the terminal, the identification and the address of the reproduction and display device, and the like.

When the capture devices 10 to 14 do not perform the reception, conversion and delivery of a data stream, the power supply control device 150 deenergizes components and modules other than the network interface 140, the control/analyzer 110 and the like which are necessary for receiving a command via the LAN 5, for the purpose of energy saving. Each memory 160 of the capture devices 10 to 14 holds information related to the capture devices 10 to 14, for example, information on the receivable broadcast channels, and reservations for tuning and receiving.

FIGURE 6 shows the configuration of each of the storage devices 20 to 24 in FIGURES 1 to 4. Each of the storage devices 20 to 24 includes: a controller and analyzer module 210 for controlling internal components and modules; a storage medium 220 having a large capacity such as a hard disk for storing data streams of broadcast programs; a protocol converter 230 which converts protocols of data streams; a network interface (NW I/F) 240 which is connected to the LAN 5; a power supply control device 250; a memory 260; and an authentication module 270. The controller/analyzer 210, the converter 230 and the authentication module 270 are implemented on the processor in the form of hardware or software.

The memory 260 stores a list of reservations of recording broadcast programs and recorded broadcast programs. In particular, the memory 260 stores information related to the identification and the address of the corresponding storage device, the identification, the date and the period of time of the broadcast program to be recorded, the indication of whether the program has been recorded or not, the identification and address and the tuned channel of the capture device to be utilized, the ID of the user who has made the reservation, the identification and address of the terminal, the identification and address of the reproduction and display device, a threshold value of the number of data streams which can be simultaneously recorded, and the like. When a plurality of users request recording of the same program, the IDs of all the users who have made the reservations, the identifications and addresses of the terminals, and the identifications and addresses of the reproduction and display devices are stored into the memory 260.

In response to a command (CMD) received via the LAN 5, the controller/analyzer 210 controls the large-capacity storage medium 220, the converter 230 and the network interface 240 to perform protocol conversion on a data stream of a broadcast program in the transmission format received via the LAN 5 into a data stream in the storage format and store the data stream, and perform protocol conversion on the stored data stream of the broadcast program in the storage format into a data stream in the transmission format to thereby provide, via the LAN 5, the data stream to the control devices 30 to 34, the reproduction and display devices 508 to 548 or the terminals 50 to 54.

When the amount of stored data on the storage medium 220 reaches or is going to reach the limit, the controller/analyzer 210 deletes older ones of the stored broadcast programs. Alternatively, when the amount of stored data on the storage medium 220 reaches or is going to reach the limit, the controller/analyzer 210 deletes ones of the stored broadcast programs that have lower priorities. The priorities are assigned to the stored broadcast programs by the user, as described later.

When deletion of a stored program in the storage devices 20 to 24 is requested by the user through the control devices 30 to 34, the controller/analyzer 210 deletes the corresponding user ID and like data in the list stored in the memory 260. When all of the user IDs and like data related to a particular program in the list are deleted, the controller/analyzer 210 deletes the particular program.

The storage devices 20 to 24 transmit and receive data streams in the LAN transmission format of MPEG2-TS/RTP, and store the data stream in the storage format of MPEG2-PS. The converter 230 performs conversion of the data stream format between the LAN transmission format and the storage format. The controller/analyzer 210 can cause the converter 230 to convert the bit rate of the stored data stream into one of a plurality of bit rate formats in accordance with a request of a receiving device, which may be the control device, the terminal, or the reproduction and display device for example, to deliver the converted data stream.

When none of the reception, conversion and delivery of a data stream occurs, the power supply control device 250 deenergizes the components and modules other than the network interface 240, the controller/analyzer 210 and the like which are necessary for receiving a command via the LAN 5, for the purpose of energy saving.

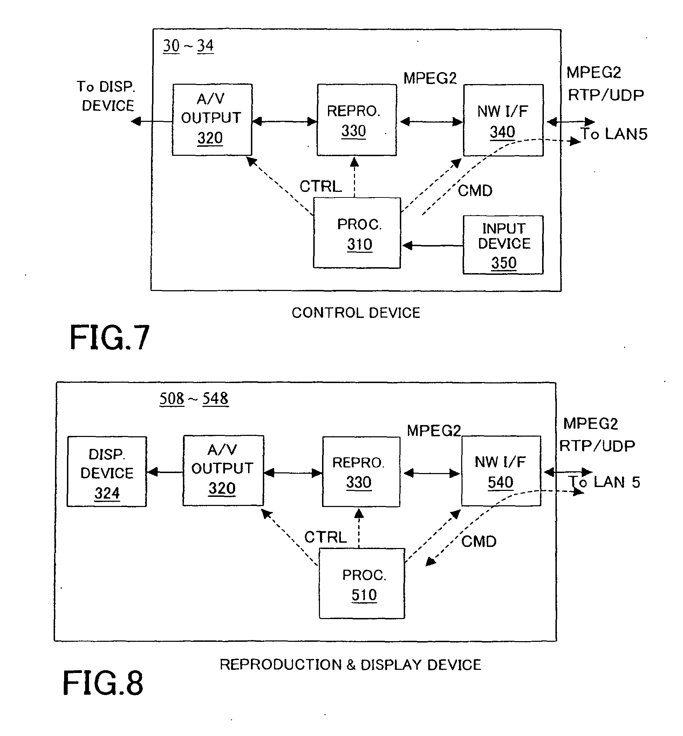

FIGURE 7 shows the configuration of each of the control devices 30 to 34 in FIGURE 1. Each of the control devices 30 to 34 includes: a processor 310 for controlling internal components and modules; a network interface (NW I/F) 340 which is connected to the LAN 5; a reproducer 330 which reproduces audio and video data streams of a broadcast program from a data stream in the transmission format; an audio/video output unit 320 which is coupled to the corresponding display device (306 to 346); and an input device 350, such as a keyboard. The reproducer 330 is implemented on the processor in the form of hardware or software.

The control devices 30 to 34 shown in FIGURE 2 have the same configuration as that shown in FIGURE 7. However, it is assumed that the control devices 30 to 34 in FIGURE 2 do not receive a data stream of a broadcast program, and the reproducer 330 does not reproduce the data stream of the broadcast program. However, the data stream of the broadcast program is received and reproduced by the reproduction and display devices 508 to 548.

In accordance with an operation of the input device 350 by a user, the processor 310 controls the audio/video output unit 320, the reproducer 330, and the network interface 340 to transmit, via the LAN 5, a command to the capture devices 10 to 14 and the storage devices 20 to 24, and to receive and reproduce a data stream of a broadcast program from the capture devices 10 to 14 and the storage devices 20 to 24 to provide the reproduced data stream to the display devices 306 to 346.

Each of the terminals 50 to 54 in FIGURE 3 includes arrangement similar to that of the control devices 30 to 34 shown in FIGURE 7, and includes the reproducer 330 and the audio/video output unit 320. Each of the terminals 50 to 54 in FIGURE 3 can transmit a command for controlling the content server 40, to the content server 40 via the LAN 5.

Each of the terminals 50 to 54 in FIGURE 4 can transmit a command for controlling the content server 40 and a command for controlling the associated reproduction and display devices 508 to 548, to the content server 40 and the associated reproduction and display device 508 to 548 via the LAN 5, respectively.

FIGURE 8 shows the configuration of each of the reproduction and display devices 508 to 548 in FIGURES 2 and 4. Each of the display devices 508 to 548 includes: a processor 510 for controlling internal components and modules; a network interface (NW I/F) 540 which is connected to the LAN 5; a reproducer 330 which reproduces a data stream of a broadcast program; an audio/video output unit 320; and a display device 324. The reproducing device 330 is implemented on the processor in the form of hardware or software.

In accordance with a command, the processor 510 controls the audio/video output unit 320, the display device 324, the reproducer 330 and the network interface 540 to transmit a command to the capture devices 10 to 14 and the storage devices 20 to 24 via the LAN 5, to receive and reproduce a data stream of a broadcast program from the capture devices 10 to 14 and the storage devices 20 to 24, to provide the reproduced data stream to the display device 324. The processor 510 receives a command together with a URL from the control devices 30 to 34 in FIGURE 2 or from the content server 40 in FIGURE 4, and accesses one of the capture devices 10 to 14 and the storage devices 20 to 24 that is associated with the URL, to receive a data stream of a broadcast program.

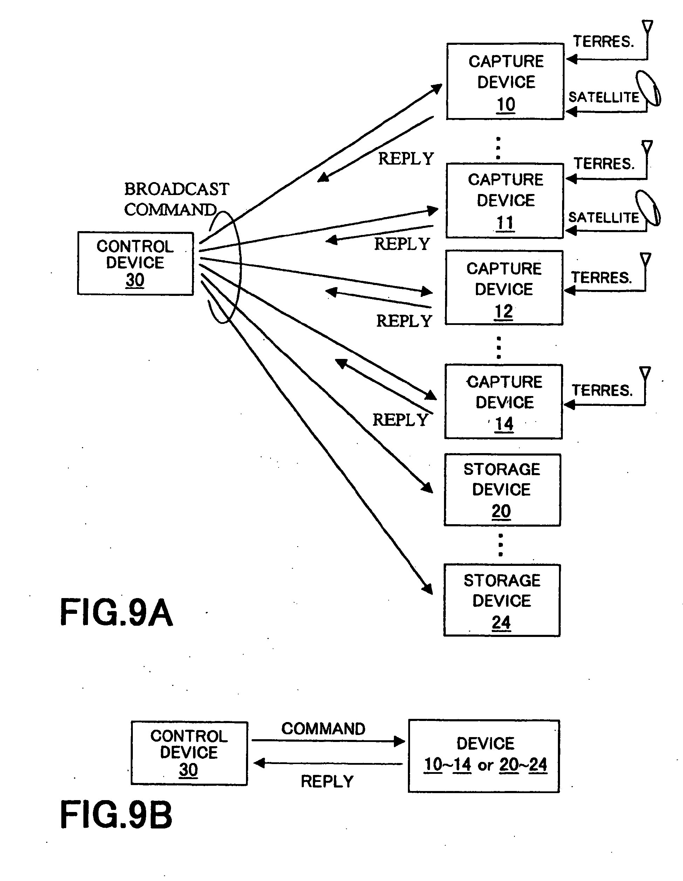

FIGURE 9A shows relations between a search command from the control device 30, and replies from the capture devices 10 to 14 and the storage devices 20 to 24. The other control devices 32 to 34 operate in the same way as the control device 30. The control device 30 broadcasts a command together with the identification and address of the control device, the user ID and the password, to the capture devices 10 to 14 and the storage devices 20 to 24. One of the capture devices 10 to 14 and the storage devices 20 to 24 that is designated by the command authenticates the user by using the authentication module 170 or 270, and replies to the command.

FIGURE 9B shows conventional relations between a network command from the control device 30, and replies from the capture devices 10 to 14 and the storage devices 20 to 24. The control device 30 transmits a command together with the identification and address of the control device, the user ID and the password, to a particular one of the capture devices 10 to 14 and the storage devices 20 to 24 at its the address. The device (10 to 14, or 20 to 24) replies to the command in a similar manner.

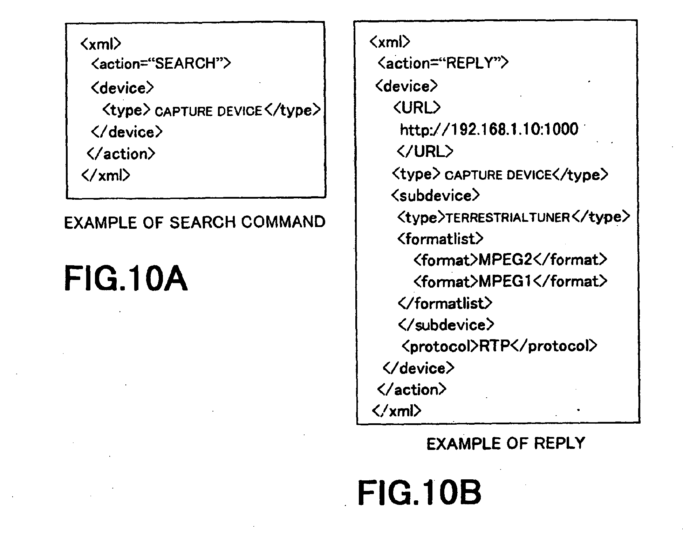

FIGURE 10A shows an example of a command described in XML (eXtensible Markup Language) of the control device 30 for searching a capture device. When a user requests recording or receiving a particular broadcast program through the input device 350, the control device 30 first transmits a search command packet in the form of UPnP (Universal Plug and Play) shown in FIGURE 10A, in order to collect information related to various functions of the capture devices 10 to 14.

FIGURE 10B shows an example of a reply described in XML from the capture devices 10 to 14. Each of the capture devices 10 to 14 transmits a reply, as shown in FIGURE 10B, back to the control device 30. The reply includes the identification and address or URL (for example, http://192.168.1.10:1000) of the capture device 10 to 14, the type of the tuner 120, the standard format (for example, MPEG1 and MPEG2) of the data stream, the protocol (for example, RTP), and the like. The control device 30 also collects information related to different functions of the storage devices 20 to 24. Thus, the control device 30 detects the presence and the number of network devices, and holds the list of the devices in a RAM.

When each of the capture devices 10 to 14 and the storage devices 20 to 24 is first connected to the LAN 5, the device broadcasts an announce packet including device information shown in FIGURE 10B as an example, so as to inform the control devices 30 to 34.

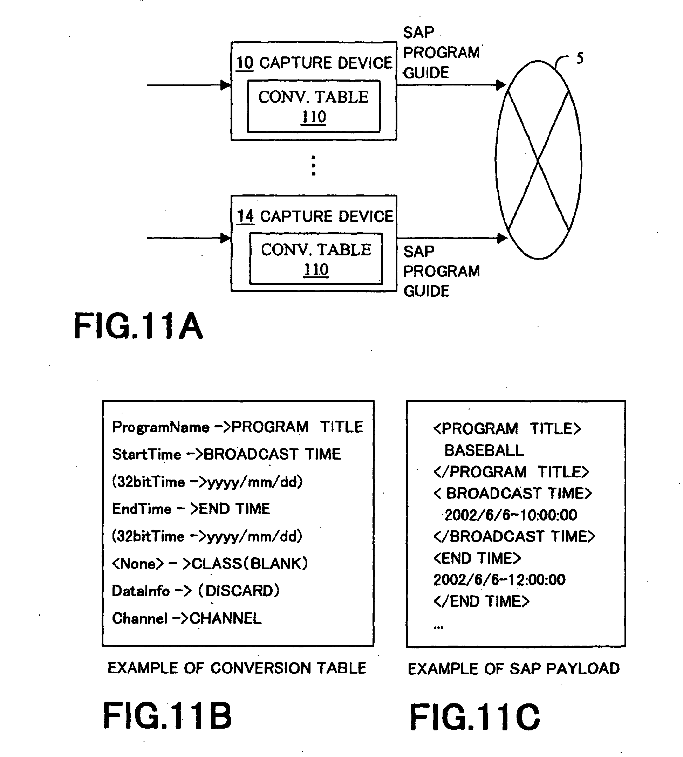

FIGURE 11A shows delivery of an electronic program guide (EPG) by the capture devices 10 to 14. Some of the capture devices 10 to 14 regularly receive an EPG on a particular channel for an EPG for the terrestrial broadcast, the satellite broadcast, the CATV system, and the like at, for example, 1:00 a.m. every day or 1:00 a.m. on every Saturday, or access a Web page for an EPG via the LAN 5 and the external network 3, so as to capture an EPG for a predetermined period, such as one day or one week.

The converters 130 of the capture devices 10 to 14 convert the protocol of the EPG captured by using a conversion table 110 described in the form of, for example, XSLT into a protocol such as SAP (Session Announcement Protocol), and then transmit the program guide to the control devices 30 to 34 or the terminals 50 to 54. FIGURE 11B shows an example of the conversion table 110. For example, item "ProgramName" is converted into a field "PROGRAM TITLE", and "StartTime" is converted into "BROADCAST TIME". The 32-bit time is converted into characters in the form of "yyyy/mm/dd". After the conversion, an item in which corresponding data is not included in the EPG is set to be blank. If converted item data corresponding to that included in the EPG is not included in the conversion table, the item data is discarded.

FIGURE 11C shows an example of EPG data described in SAP and delivered to the control devices 30 to 34. In response to a request by the control devices 30 to 34, or to reception of a new EPG, the capture devices 10 to 14 deliver the EPG data, as shown in FIGURE 11C, to the control devices 30 to 34.

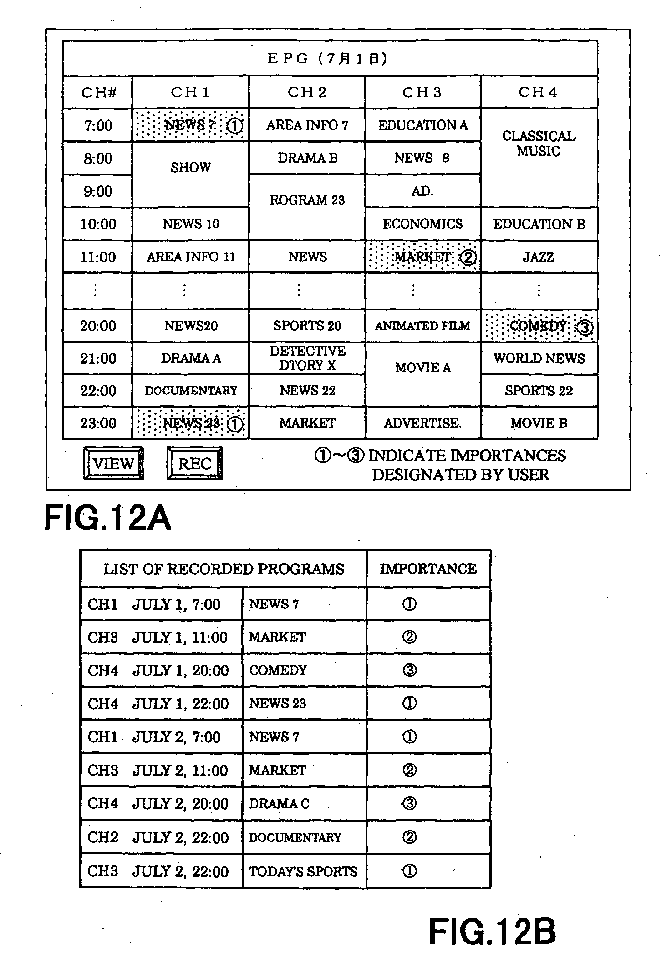

FIGURE 12A shows an example of an EPG displayed on the display devices 306 to 346 or the terminals 50 to 54 (the display device 506). A user points a program in the EPG and then presses a software button of "VIEW" or "RECORD", so as to view or record the program. When the user selects recording of a program, he or she may assign an importance or priority, for example, either one of 1 to 3 to the program. When the importance is not assigned by the user, the importance is set to a default value of, for example, 2. A program with higher importance is preferentially recorded and stored by the storage devices 20 to 24. FIGURE 12B shows an example of a list of stored programs which is produced by the storage devices 20 to 24.

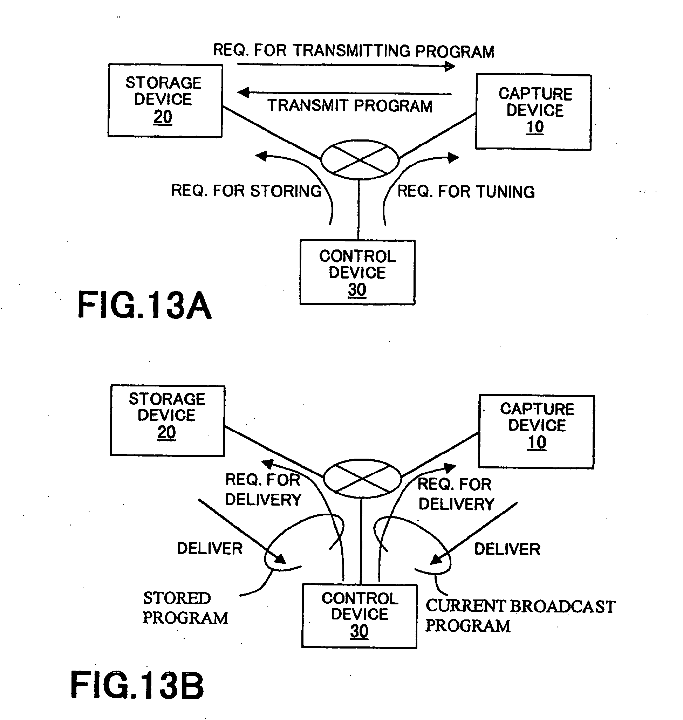

FIGURES 13A and 13B show control signals for controlling the capture device 10 and the storage device 20 by the control device 30 in accordance with a request by a user.

Referring to FIGURE 13A, in order to record a broadcast program desired by the user, the control device 30 transmits, to an appropriate capture device or the device 10, a command for transferring a data stream of a broadcast program which is received by tuning to a particular channel for a desired period of time. The control device 30 then transmits a command for storing the data stream of the broadcast program from the capture device 10 for the period of time, to an appropriate storage device or the device 20. The storage device 20 requests the capture device 10 to transfer the data stream of the broadcast program received for the period of time, to the storage device 20. The capture device 10 is tuned to the channel for the period of time, and transmits the received data stream of the broadcast program to the storage device 20.

Referring to FIGURE 13B, when a user wishes to view a current broadcast program, the control device 30 transmits a command to an appropriate capture device or the device 10 so as to transmit a data stream of a broadcast program received by tuning to a particular channel for a particular period of time, to the control device 30, in order to provide the current broadcast program requested by the user to the display device 306. In response to the request, the capture device 10 transmits the data stream of the received broadcast program to the control device 30. When a user wishes to view a broadcast program which is already stored, the control device 30 transmits a command to the storage device 20 to transmit the data stream of the broadcast program stored in the storage device 20 to the control device 30, in order to provide the stored broadcast program which is requested by the user to the display device 306. In response to the request, the storage device 20 transmits the data stream of the stored broadcast program to the control device 30.

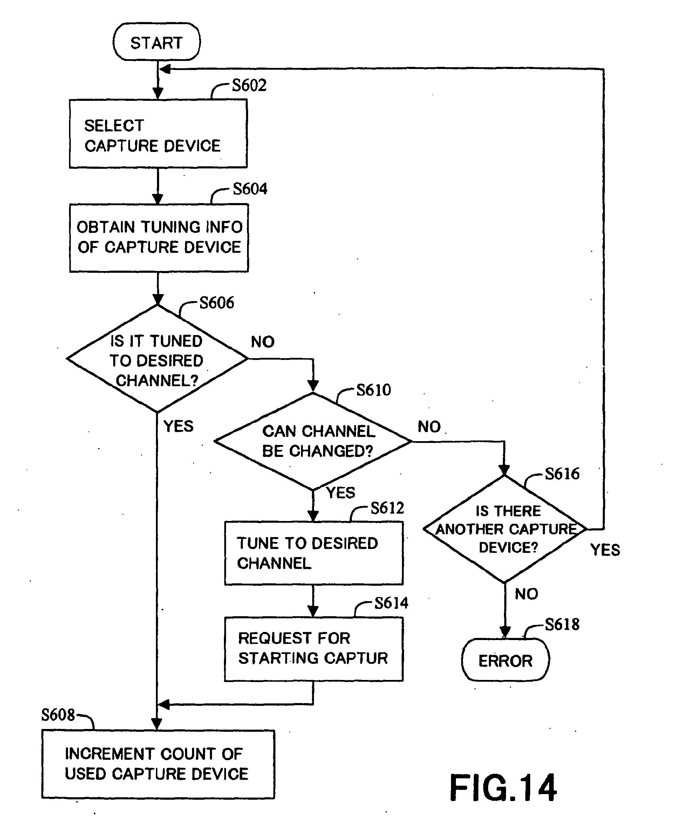

FIGURE 14 is a flowchart for controlling the capture devices 10 to 14 that is executed by each of the control devices 30 to 34, as shown in FIGURE 13A.

At Step 602, for example, the control device 30 selects one of the capture devices 10 to 14. At Step 604, the control device 30 acquires information related to the tuned state of the selected capture device, for example, the capture device 10. At Step 606, the control device 30 determines whether the current tuned channel is the desired channel or not, based on the tuning information. If it is determined that the channel is the desired channel, the control device 30 increments the count of use of the capture device by one (1) at Step 608. When the count of the capture device is one (1) or more, the capture device is currently being used, and the tuner 120 of the capture device is not permitted to be tuned to another channel.

If it is determined at Step 606 that the channel is not the desired channel, the control device 30 at Step 610 determines whether the tuned channel can be changed or not, by making an inquiry to the capture device 10 based on the tuning information. Alternatively, in accordance with a request by the control device 30, the capture device 10 may determine whether the tuned channel can be changed or not, based on the current state of operation and the list of reservations, and inform the control device 30 of the determination result. If it is determined that the channel can be changed, the control device 30 at Step 612 controls the tuner 120 so as to be tuned to the desired channel, and at Step 614 causes the capture device 10 to start the capturing operation. Thereafter, the procedure proceeds to Step 608. If it is determined at Step 610 that the channel can not be changed, the control device 30 at Step 616 determines whether there is another capture device or not. If it is determined that there is another capture device, the procedure returns to Step 602. At Step 602, the control device 30 selects another capture device (11 to 14). If it is determined that there is no other capture device, the control device 30 performs the processing for error at Step 618. Alternatively, even if it is determined at Step 610 that the channel can be changed, the procedure may proceed to Step 616, and, at the subsequently iterated Step 606, the control device 30 may first search for a capture device in which the current tuned channel is the desired channel. If it is finally determined at Step 610 that there is no further capture device, the tuned channel of the capture device in which the tuned channel can be changed may be tuned to the desired channel at Step 612.

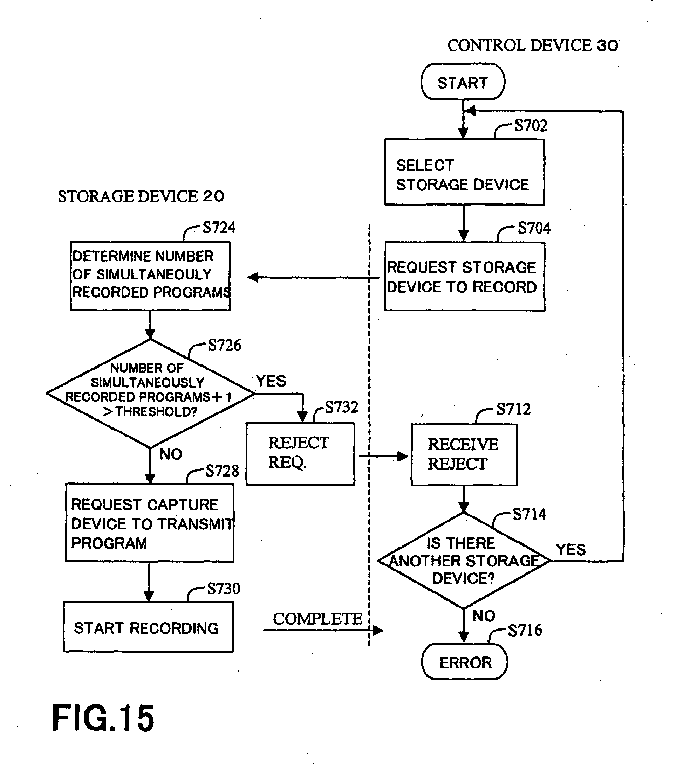

FIGURE 15 is a flowchart for controlling the storage devices 20 to 24 that is executed by each of the control devices 30 to 34, as shown in FIGURE 13A.

At Step 702, for example, the control device 30 selects one of the storage devices 20 to 24. At Step 704, the control device 30 transmits a request for recording a data stream of a desired program to the selected storage device, for example, the storage device 20. The storage device 20 can simultaneously record a plurality of programs. The storage device 20 at Step 724 determines the current number of the simultaneously recorded programs, and at Step 726 determines whether a value which is obtained by adding one (1) to the current number of the simultaneously recorded programs is larger than the threshold (the maximum tolerable number) or not. Alternatively, the determination may be performed by the control device 30. If it is determined that the value is not larger than the threshold, the storage device 20 at Step 728 requests the storage device 10 which has been determined in the flowchart of FIGURE 14, to transmit the data stream of the program to the storage device 20. At Step 730, the storage device 20 starts the recording, and informs the control device 30 of the start of the recording.

If it is determined at Step 726 that the value is larger than the threshold, the storage device 20 at Step 732 transmits the rejection of the request to the control device 30. The control device 30 at Step 712 receives the rejection, and at Step 714 determines whether there is another storage device or not. If it is determined that there is another storage device, the procedure returns to Step 702, where the control device 30 selects another storage device (21 to 24). If it is determined that there is no other storage device, the control device 30 performs the processing for error at Step 716.

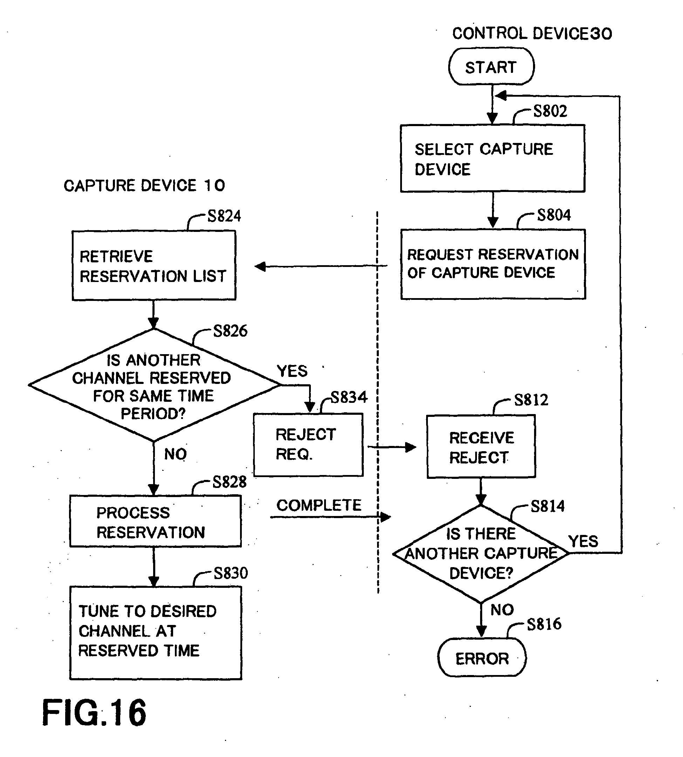

FIGURE 16 is a flowchart for reserving the capture devices 10 to 14 for use that is executed by each of the control devices 30 to 34, as shown in FIGURE 13A.

At Step 802, for example, the control device 30 selects one of the capture devices 10 to 14. At Step 804, the control device 30 transmits a request for a reservation for use of the selected capture device 10, to the capture device 10. The capture device 10 at Step 824 retrieves its own reservation list, and at Step 826 determines whether another channel is reserved for the same period of time or not, that is, whether the reservation of the desired channel is impossible or not. Alternatively, the determination may be performed by the control device 30. If it is determined that no other channel is reserved for the same period of time, the capture device 10 at Step 828 performs the processing for the reservation, and informs the control device 30 of the completion of the reservation. At Step 830, the capture device 10 causes the tuner 120 to be tuned to the desired channel at the reserved time.

If it is determined at Step 826 that another channel is reserved, the capture device 10 at Step 834 transmits the rejection of the request to the control device 30. The control device 30 receives the rejection at Step 812. At Step 814, the control device 30 determines whether there is another capture device or not. If it is determined that there is another capture device, the procedure returns to Step 802, where the control device 30 selects another capture device (11 to 14). If it is determined that there is no other capture device, the control device 30 performs the processing for error at Step 816.

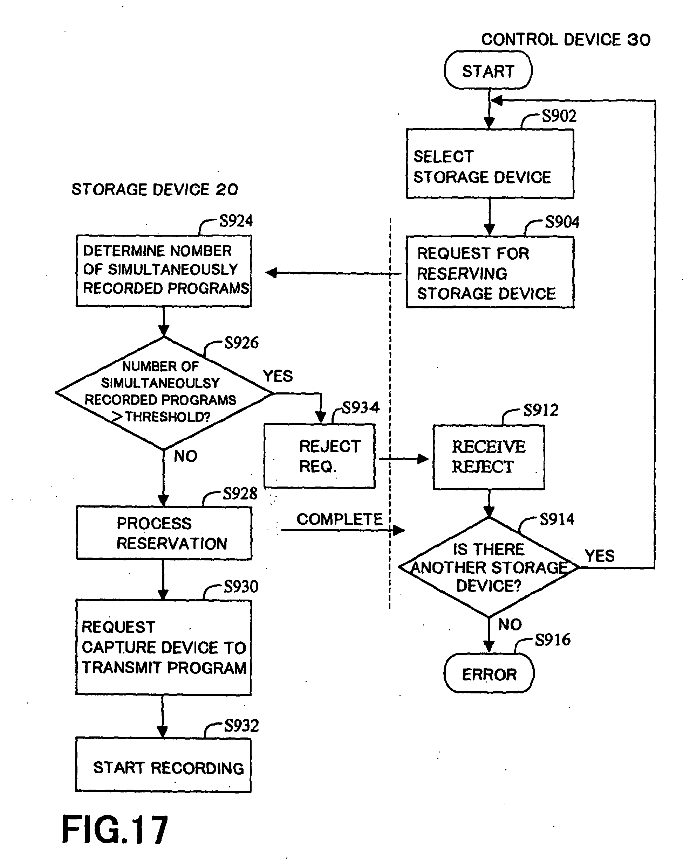

FIGURE 17 is a flowchart for reserving the storage devices 20 to 24 for use that is executed by each of the control devices 30 to 34, as shown in FIGURE 13A.

At Step 902, the control device 30 selects one of the storage devices 20 to 24. At Step 904, the control device 30 transmits a request for reserving of recording of a desired program to the selected storage device, for example, the storage device 20. The storage device 20 at Step 924 determines the current number of simultaneously recorded programs, and at Step 926 determines whether a value which is obtained by adding one (1) to the current number of the simultaneously recorded programs is larger than a threshold value (the maximum tolerable number) or not. Alternatively, the determination may be performed by the control device 30. If it is determined that the value is not larger than the threshold, the storage device 20 processes the reservation at Step 928, and informs the control device 30 of the completion of the reservation. The storage device 20 at Step 930 requests the capture device 10 to transmit the data stream of the program to the storage device 20 at the reserved time. At Step 932, the storage device 20 starts the recording, and informs the control device 30 of the start of the recording.

If it is determined at Step 926 that the value is larger than the threshold, the storage device 20 at Step 934 transmits the rejection of the request to the control device 30. The control device 30 at Step 912 receives the rejection, and at Step 914 determines whether there is another storage device or not. If it is determined that there is another storage device, the procedure returns to Step 902, where the control device 30 selects another storage device (21 to 24). If it is determined that there is no other storage device, the control device 30performs the processing forerror at Step 916.

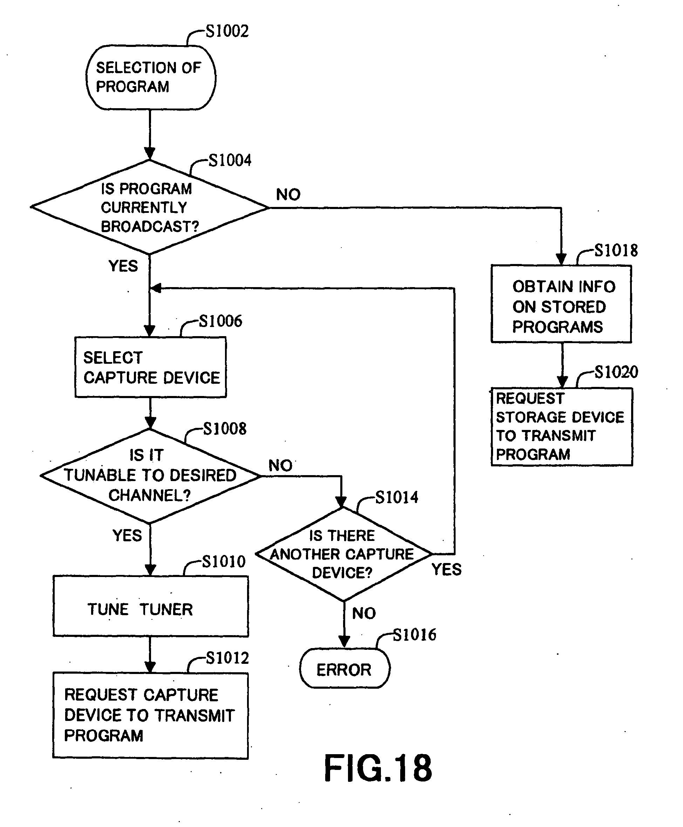

FIGURE 18 is a flowchart for presenting a program that is executed by each of the control devices 30 to 34, as shown in FIGURE 13B.

A user selects a desired current or past broadcast program while viewing the EPG shown in FIGURE 12A or the list of recorded programs shown in FIGURE 12B which is displayed on the display device 306-346, 324 or 506. In FIGURE 12A, recorded programs are highlighted with, for example, characters in a different color or with a background of a different color. In FIGURE 12A, they are indicated with dot shades.

When a desired program is selected by the user at Step 1002, the control device 30 at Step 1004 looks up the EPG and the list of recorded programs to determine whether the program is currently broadcast or not.

If it is determined that the program is not currently being broadcast, that is, when the program is already recorded, the control device 30 at Step 1018 requests the storage device, for example, the storage device 30, which stores the desired program, to transmit the program. When it is impossible to determine in which storage device the desired program is recorded, the control device 30 obtains the lists of recorded broadcast programs from the storage devices 20 to 24 for making the determination.

If it is determined at Step 1004 that the program is currently being broadcast, the control device 30 selects one of the capture devices 10 to 14 at Step 1006, and acquires information related to the tuned state of the selected capture device, for example, the device 10. At Step 1008, the control device 30 determines whether the tuner 120 can be tuned to the desired channel or not. Alternatively, the determination may be performed by the capture device 10. If it is determined that the tuning is possible, the control device 30 at Step 1010 controls the tuner 120 of the capture device 10 to be tuned to the desired channel. At Step 1012, the control device 30 transmits a request for transmitting the program, to the capture device 10. If it is determined that the tuning is not possible, the control device 30 at Step 1014 determines whether there is another capture device or not. If it is determined that there is another capture device, the procedure returns to Step 1006 in which the control device 30 selects another capture device (11 to 14). If it is determined that there is no other capture device, the control device 30 performs the processing for error at Step 1016.

In the capture devices 10 to 14 and the storage devices 20 to 24, the current state of operation and the precedent reservation take priority over a new capturing request and a new recording request. When the corresponding capture device 10 to 14 and storage devices 20 to 24 start the capturing and the recording in accordance with a request and a reservation, they may inform all of the control devices 30 to 34 of the starting.

When the loss rate of a packet of received data stream exceeds a predetermined threshold value, e.g., 10 bits per 10 seconds, each of the devices on the LAN 5 which receive a data stream from the capture devices 10 to 14 and the storage device 20 to 24, namely, each of the storage devices 20 to 24, the control devices 30 to 34, the terminals 50 to 54, and the reproduction and display devices 508 to 548 requests the capture device (10 to 14) or the storage device (20 to 24) serving as a device for transmitting the packet, to gradually reduce the bit rate of the transmitting data stream of a particular broadcast program in the manner shown in FIGURE 9. Here, the reduction of the bit rate means the reduction in image quality and/or audio quality. In the MPEG standard, for example, B pictures are decimated, or higher order AC coefficients are cut off. Thereafter, when the loss rate of the packet becomes lower than another threshold value (for example, 4 bits per 10 seconds), the receiving device requests the corresponding transmitting device to gradually increase the bit rates Preferably, the storage devices 20 to 24 employ a threshold value for a receiving data stream which is higher than that for the control devices 30 to 34, the terminals 50 to 54, and the reproduction and display devices 508 to 548. Such a particular broadcast program subject to the bit rate reduction may be a program with the lowest priority among broadcast programs which are delivered for the purpose of presentation in the control devices 30 to 34 or the reproduction and display devices 508 to 548, or among broadcast programs that are currently transmitted on the LAN 5. Accordingly, it is possible to prevent transmission data streams on the LAN 5 from exceeding the transmission capacity of the LAN 5.

Alternatively, the monitoring of the bit rate or traffic may be performed by another device, for example, the content server 40. In this case, the traffic is required to be controlled, the other device may notify it to the receiving devices, and the receiving devices may control the respective transmitting devices. Alternatively, the monitoring and control of the bit rate or traffic may performed by another devices, for example, the content server 40, rather than by each receiving device. For example, the other device may control the traffic on the LAN 5 to gradually decrease, when the current traffic on the LAN 5 exceeds a threshold value which is equal to a predetermined ratio of the maximum capacity (for example, 70%), and may control the traffic on the LAN 5 to gradually increase, when the current traffic on the LAN 5 is lower than a threshold value which is equal to another predetermined ratio of the maximum capacity (for example, 50%).

Generally, an encrypted broadccst program is broadcast together with an encrypted descramble keys A control device or a reproducing device supplies the encrypted descramble key to a smart card to produce a decrypted descramble key. By using the produced descramble key, the encrypted broadcast program is descrambled and reproduced. A specific encrypted descramble key can be decrypted only by a specific smart card to produce a decrypted descramble key. The capture devices 10 to 14 filter out a data stream of an encrypted descramble key which usually has a relatively large amount, so that the data stream of the encrypted descramble key is not delivered on the LAN 5. The control devices 30 to 34 request the capture devices 10 to 14 beforehand, in the manner shown in FIGURE 9, to transmit an encrypted descramble key for the control device or the corresponding reproducing device to the control device or the reproducing device when the capture devices receive the encrypted descramble key. When the capture devices 10 to 14 receive the encrypted descramble key for one of the control devices 30 to 34 or the corresponding reproducing device, the capture devices transmit the encrypted descramble key to the control device or the reproducing device, in accordance with the requests which have been received beforehand from the control devices 30 to 34.

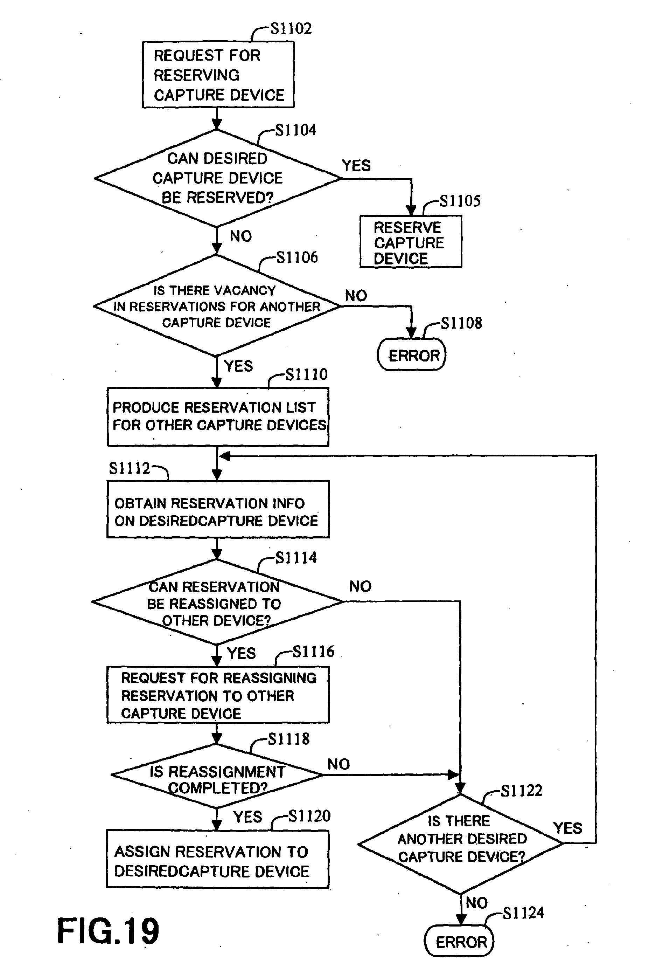

FIGURE 19 is a flowchart for reserving and reassigning the reservations in the capture devices 10 to 14 depending on the receiving channels of the capture devices 10 to 14, executed by each of the control devices 30 to 34, as shown in FIGURE 13B. Steps 1106 to 1124 in FIGURE 19 are used in the error processing at Step 816 in FIGURE 16.

Referring also to FIGURE 9A, when a request for reserving of recording of a desired broadcast program by a user occurs, the control device 30 at Step 1102 selects the capture devices 10-11 having the tuner 120 which has a channel for receiving the desired broadcast program, for example, satellite broadcasting channel 1, and then requests the selected capture devices 10-11 to reserve them for use. At Step 1104, the control device 30 determines whether one of the capture devices 10 to 11 can be reserved or not, i.e., whether another channel is reserved for the same period of time or not. The determination whether the capture devices 10 to 11 can be reserved or not may be made by the respective capture devices, and results of the determinations may be notified to the control device 30. When the reservation can be made, one of the capture devices, for example, the capture device 10 is reserved at Step 1106.

If it is determined at Step 1104 that the capture device 10 can not be reserved, the control device 30 at Step 1106 checks the information related to the reservations of the other capture devices 12 to 14 having the tuner 120 which does not have the channel (for satellite broadcast) for receiving the desired program, to determine whether there is any vacancy for the reservations in another channel (for terrestrial broadcast) or not. Alternatively, the determination whether there is any vacancy for thereservation in the other channel (for terrestrial broadcast) in the other capture devices 12 to 14 or not may be performed by the respective capture devices 12 to 14, and results of the determinations may be notified to the control device 30. If it is determined that there is no vacancy for reservation in the other channel (for terrestrial broadcast), the procedure proceeds to Step 1108, and the processing for error is performed.

If it is determined that there is a vacancy for reservation in the other channel (for terrestrial broadcast), the control device 30 at Step 1110 produces a list of reservations for each of the other capture devices 12 to 14. At Step 1112, the control device 30 selects one of the desired capture devices 10 to 11, for example, the capture device 10, and acquires the information of reservations of the capture device. At Step 1114, the control device 30 determines whether a reservation of the other channel (for terrestrial broadcast) in the capture device 10 can be reassigned to the other capture device 11-14 or not, based on the lists of reservations. Alternatively, the determination whether the reservation of the other channel (for terrestrial broadcast) can be reassigned to one of the other capture devices 11 to 14 or not may be performed by the respective capture devices 11 to 14, and results of the determinations may be notified to the control device 30. If it is determined that the reassignment can not be performed, the procedure proceeds to Step 1122.

If it is determined that the reassignment can be performed, the control device 30 at Step 1116 requests the other control device 31-34, which has reserved the capturing of a data stream of the broadcast program on the other channel (for terrestrial broadcast) in the capture device 10, to reassign the reservation of the capturing of the program. At Step 1118, it is determined whether the reassignment is completed or not. If it is determined that the reassignment is completed, the control device at Step 1120 requests the desired capture device 10 to reserve the desired channel (satellite broadcast channel 1) for the desired program. If it is determined that the reassignment is not completed, the procedure proceeds to Step 1122.

At Step 1122, the control device 30 determines whether there is another desired capture device having the desired channel (satellite broadcasting channel 1) or not. If it is determined that there is another desired capture device (... 14), the procedure returns to Step 1114, where the control device 30 acquires the information related to reservations of the other desired capture device (... 14). If it is determined that there is no other desired capture device, the control device 30 performs the processing for error at Step 1124.

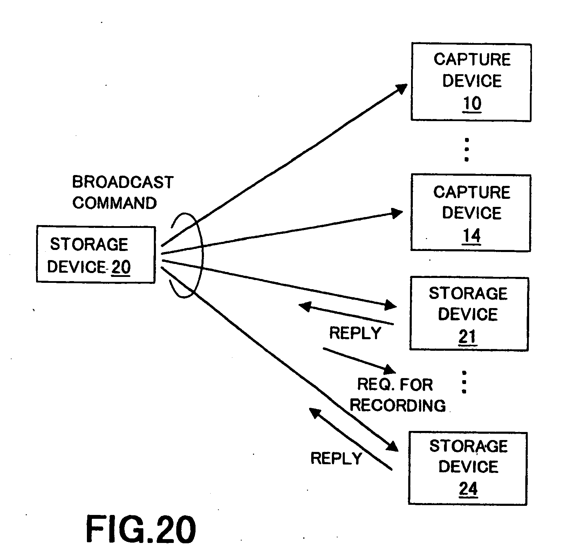

FIGURE 20 shows an example of a procedure of changing a storage device for recording a data stream of a program, executed between the storage device 20 and the other storage device 21-24. The other storage devices 21 to 24 operate in the same manner as the storage device 20. When the storage capacity of the storage device 20 becomes insufficient during the recording of a data stream of a broadcast program, the storage device 20 broadcasts a search command for making an inquiry about an available capacity of the storage capacity, to the other storage devices 21 to 24. The other storage devices 21 to 24 reply to the command with their available capacities. The storage device 20 requests one of the other storage devices 21 to 24 that has an available capacity, to record a subsequent portion of the data stream that follows a last portion of the data stream recorded in the storage device 20.

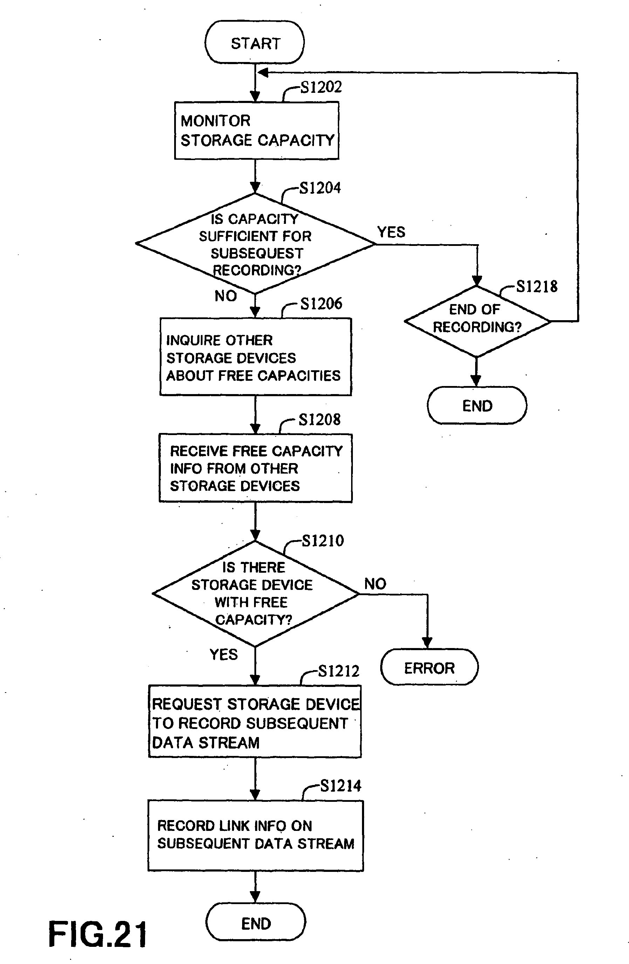

FIGURE 21 is a flowchart for switching the storage devices for recording a data stream of a broadcast program that is executed by each of the storage devices 20 to 24. The flowchart of FIGURE 21 is executed at Step 730 of FIGURE 15 or at Step 932 of FIGURE 17.

At Step 1202, the controller/analyzer 210 of each of the storage devices 20 to 24 monitors remaining free capacity of its large-capacity recording medium 220 while data stream of a current program is being recorded. At Step 1204, the controller/analyzer 210 determines whether the free capacity of the large-capacity recording medium 220 is sufficient to record the subsequent portion of the data stream of the program or not, based on the type of the program, the record time period and the like. If it is determined that it is sufficient, the controller/analyzer 210 at Step 1218 determines whether the recording of the program is ended or not. If the recording is not ended, the procedure returns to Step 1202. If the recording is ended, the procedure exits from the routine shown in FIGURE 21.

If it is determined that the remaining free capacity is not sufficient, the controller/analyzer 210 at Step 1206 makes inquiry about free capacities of the other storage devices 21 to 24, in the manner as described above. At Step 1208, the controller/analyzer 210 receives information related to the free capacities of the other storage devices 21 to 24. At Step 1210, the controller/analyzer 210 determines whether there is a storage device with a free capacity or not, based on the information. If it is determined that there is no storage device with a free capacity, the controller/analyzer 210 performs the processing for error.

If it is determined at Step 1210 that there is one or more storage devices with a free capacity, the controller/analyzer 210 at Step 1212 requests one of the storage devices with a free capacity, for example, the storage device 21, to record the subsequent portion of the data stream. At Step 1214, the controller/analyzer 210 adds information indicating a link to the subsequent portion of the data stream, to the last recorded portion of the data stream of the broadcast program recorded in the large-capacity recording medium 220. The controller/analyzer 210 informs the corresponding control device, for example, the control device 30 of the switching between the storage devices. The link information indicates the recording position of the start of the subsequent portion of the data stream in the large-capacity recording medium 220 of the storage device 21. Thereafter, the procedure exits from the routine of FIGURE 21. When the control devices 30 to 34 receive the information indicating the link from the storage device 20 during the receiving of a data stream from the storage device 20, the control devices 30 to 34 request the other storage device 21 in which the subsequent portion of the data stream is recorded, to transmit the subsequent portion of the data stream.

At Step 1206, the controller/analyzer 210 may first inform the corresponding one of the control devices (30 to 34) of the shortage of the storage capacity, and Steps 1206 to 1214 may be executed by the control device (30 to 34).

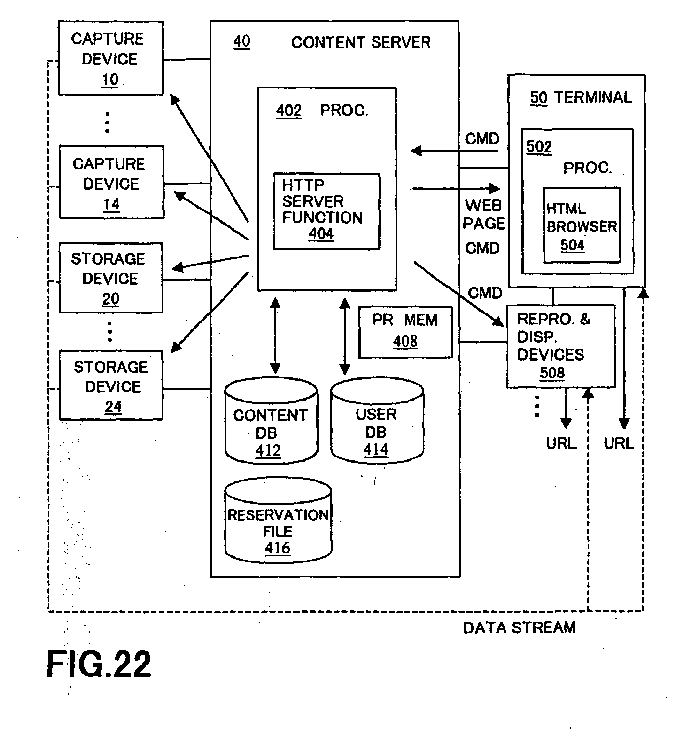

FIGURE 22 shows the configuration of the content server 40 in FIGURES 3 and 4. The content server 40 includes: a processor 402 having a CPU, a ROM and a RAM; a program memory 408 for storing an application program, such as a hard disk device or a RAM; and a content database 412, a user database 414 and a reservation file 416 which are stored in a storage device such as a hard disk device. An HTTP server function 404 is implemented on the processor 402 in the form of hardware or software. The program memory 408 stores an application program, in which a function, for example, the HTTP server function 404, is implemented.

The HTTP server function 404 receives a command together with a user ID and a password from the terminals 50 to 54, so as to authenticate the user. In response to the command, the HTTP server function 404 controls the capture devices 10 to 14 and the storage devices 20 to 24, so that the data stream of the required broadcast program is provided directly or via the server 40 from the capture devices 10 to 14 or the storage devices 20 to 24 to the terminals 50 to 54 or the reproduction and display devices 508 to 548, and also so that recording of the data stream of the requested broadcast program is reserved, and the data stream of the broadcast program from the capture devices 10 to 14 is recorded into the storage devices 20 to 24 for the reserved period of time. In this case, the capture devices 10 to 14 or the storagedevices 20 to 24 do not need to perform the authentication of a user.

Each of the terminals 50 to 52, which is typically a PC, includes a processor 502 having a CPU, a ROM and a RAM. An application program, such as an HTML browser 504, is implemented on the processor 502.

A user accesses the server 40 by using a URL on, for example, the browser 504 of the terminal 50. In response to the access of the user, the server function 404 provides, to the terminal 50-54, a Web page for reserving of delivery and recording of a broadcast program, and controls the capture devices 10 to 14 and the storage devices 20 to 24 in accordance with the selection and the input data by the user on the Web page. The selection and the input data are transmitted as an HTTP command to the server function 404. The server function 404 converts the HTTP command into a network command for the capture devices 10 to 14 and the storage devices 20 to 24, to control the capture devices 10 to 14 and the storage devices 20 to 24 in the same manner as the above-described control devices 30 to 34. However, in the reassignment of reservations, as shown in FIGURE 19 for example, the other capture device at Steps 1106, 1110 and 1122 corresponds to another user, and the other capture device at Step 1116 corresponds to the server function 404 per se.

At Steps 1012 and 1020 in FIGURE 18, the server function 404 transmits, to the corresponding terminal 50 to 54 or the corresponding reproduction and display device 508 to 548, a command to access a Web site of the URL of a corresponding one of the capture devices 10 to 14 and the storage devices 20 to 24, together with the URL. The terminals 50 to 54 or the reproduction and display devices 508 to 548 access the corresponding one of the capture devices 10 to 14 and the storage devices 20 to 24 by using the received URL, to receive a data stream of a broadcast program.

The server function 404 stores a reservation list of the recording of the broadcast program requested by the user terminals 50 to 52, into the reservation file 416. The content server 40 centrally manages the reservations, so that it is not necessary for the capture devices 10 to 14 and the storage devices 20 to 24 to manage the reservations. The list includes the information related to the identification, the period of time, the capture device to be used and the tuned channel of the broadcast program to be recorded, the storage device to be used, the ID of the user who has made the reservation, the identification and address of the terminal, and the identification and address of the reproduction and display device. When a plurality of users request recording of the same program, the IDs of all the users who performed the reservations, the identifications and addresses of the terminals, and the identifications and addresses of the reproduction and display devices are incorporated into the list.

In response to requests of recording of a broadcast program by a plurality of users, the server function 404 selects, for example, capture devices, storage devices and the like which are to be used in the recording schedule, in accordance with the principle of the algorithms of the flowcharts shown in FIGURES 16, 17 and 19.

At the start time of the broadcast program in the list, the server function 404 transmits the request for tuning of the tuner and reception of the program, to the corresponding capture device, and transmits the request for reception and recording of the program from the capture device, to the corresponding storage device.

When a user requests deletion of a program which is recorded in the storage devices 20 to 24 through the terminal, the server function 404 deletes the corresponding user ID, and the like from the list. When all of the user IDs and the like related to a particular program are deleted from the list, the server function 404 requests the corresponding storage device to delete the corresponding program.

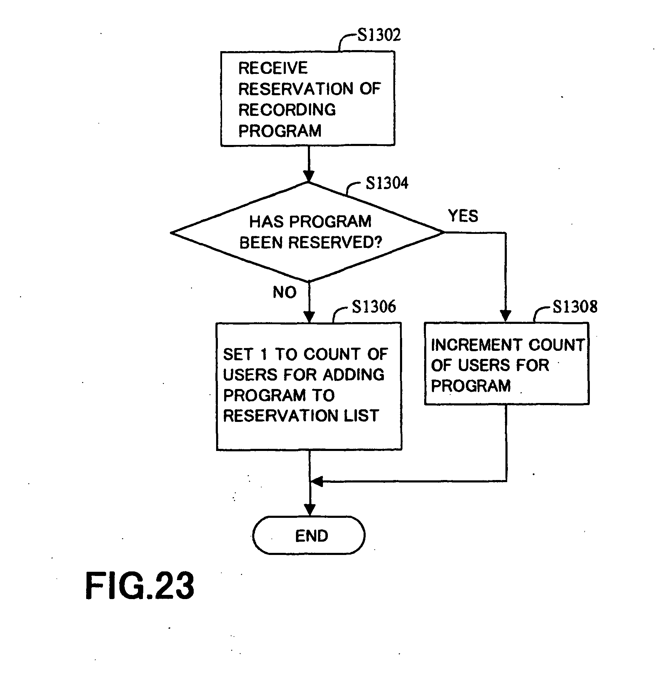

FIGURE 23 is a flowchart for receiving requests for reservations of recording broadcast programs from the plurality of user terminals 50 to 52 that is executed by the server function 404 of the content server 40.

A user accesses the content server 40 by using the browser 504 on the terminal 50, to reserve recording of a broadcast program. At Step 1302, the server function 404 receives the request for reserving the recording of the program from the terminal 50. At Step 1304, the server function 404 looks up the reservation file 416 to determine whether the program is already reserved by another terminal or not. If it is determined that the program is already reserved, the server function 404 at Step 1306 increments the count of users for the program in the reservation file 416. If it is determined that the program has not been reserved, the server function 404 adds the recording of the program to the reservation file 416 at Step 1308, and resets the user count for the program to one (1).

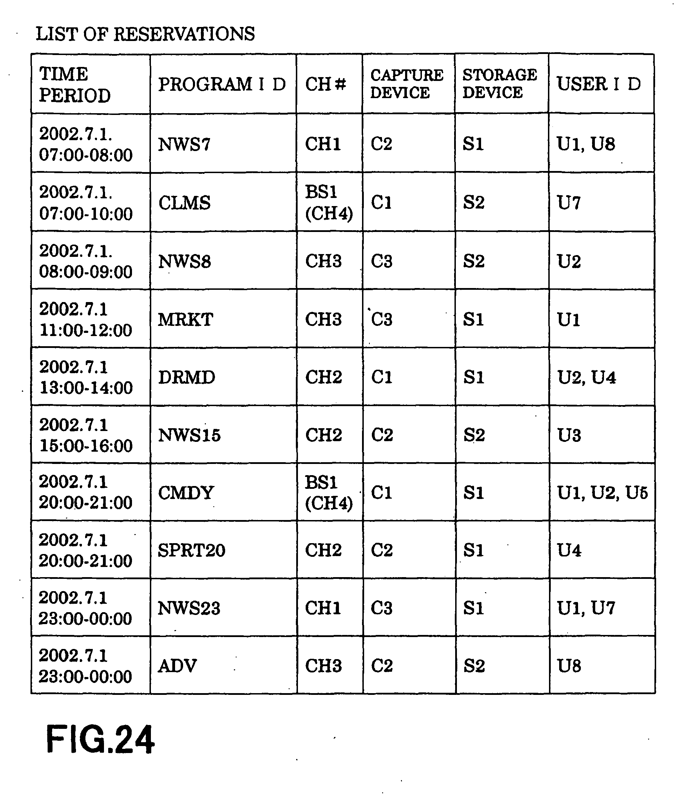

FIGURE 24 shows an example of a list of reservations stored in the reservation file 416.

The above-described embodiments are only typical examples, and their modifications and variations are apparent to those skilled in the art. It should be noted that those skilled in the art can make various modifications to the above-described embodiments without departing from the scope of the invention as defined in the accompanying claims.

## Claims

1. A control device (30, 32, 34) which is connectable to a plurality of data stream capture devices (10, 11, 14) and one or more storage devices (20, 21, 24) via a local area network (5), wherein
said control device comprises a processor (310);
said processor (310) is adapted to receive, from each said data stream capture device (10, 11, 14) and storage device (20, 21, 24) when the said data stream capture device or storage device first connects to the local area network, an announce packet including device information of the said data stream capture device or storage device;
said processor (310) is adapted to transmit, in response to a user's request, a search command to said plurality of data stream capture devices (10, 11, 14) and said one or more storage devices (20, 21, 24) and to collect the device information related to functions of the capture devices and the storage devices from replies received;
said processor (310) is adapted to request, in response to said replies, one of said plurality of capture devices (10, 11, 14) to tune to a desired channel and receive a desired data stream, when it is determined that said one capture device is tunable to said channel; and
said processor (310) is adapted to request, in response to said replies, one of said one or more storage devices (20, 21, 24) to record the data stream from said one capture device (10, 11, 14), when it is determined that said one storage device can record the data stream.

2. A control device (30, 32, 34) according to claim 1, wherein, when said one capture device (10, 11, 14) is to be tuned to another channel, said processor (310) causes another one of said plurality of capture devices to be tuned to said other channel instead of said one capture device, and then provides said request to said one capture device.

3. A control device (30, 32, 34) according to claim 1 or 2, wherein, when an amount stored in said one storage device (20, 21, 24) reaches a limit while said one storage device is recording the data stream, said processor (310) requests another one of said one or more storage devices to record a subsequent portion of the data stream.

4. A control device (30, 32, 34) according to claim 1, 2 or 3, wherein the data stream is a data stream of a program which is scheduled to be broadcast in the future.

5. A control device (30, 32, 34) according to any of claims 1-4, wherein said processor receives program guide data in a predetermined format from one of said plurality of capture devices (10, 11, 14).

6. A control device (30, 32, 34) according to any of claims 1-5, wherein said processor requests said one capture device (10, 11, 14) to transmit a decryption key which is necessary for reproducing the data stream.

7. A control device (30, 32, 34) according to any of claims 1-6, wherein said processor (310) requests said one capture device (10, 11, 14) to change a bit rate of a data stream to be transmitted.

8. A control device (30, 32, 34) according to any of claims 1-7, wherein said processor (310) requests said one storage device (20, 21, 24) to change a bit rate of a data stream to be transmitted.

9. A control device (30, 32, 34) according to any of claims 1-8, wherein said processor (310) receives and reproduces the data stream, and provides the reproduced data stream to a display device (306, 326, 346).

10. A control device (30, 32, 34) according to any of claims 1-9, wherein a reproducing device (548) which is connectable to said local area network (5) is associated with said control device.

11. A control device (30, 32, 34) according to any of claims 1- 10, wherein the user's request is received via said local area network (5).

12. A control device (30, 32, 34) which is connectable to a plurality of data stream capture devices (10, 11, 14) and to one or more storage devices (20, 21, 24) via a local area network (5), wherein said control device comprises a processor (310);
said processor (310) is adapted to receive, from each said data stream capture device (10, 11, 14) and storage device (20, 21, 24) when the said data stream capture device or storage device first connects to the local area network, an announce packet including device information of the said data stream capture device or storage device;
said processor (310) is adapted to transmit, in response to a user's request, a search command to said plurality of data stream capture devices (10, 11, 14) and said one or more storage devices (20, 21, 24) and to collect device information related to functions of the capture devices and the storage devices from replies received;
said processor (310) is adapted to request, in response to said replies, one of said plurality of capture devices (10, 11, 14) to be tuned to a channel on which a data stream desired by a user can be received and to receive and provide said desired data stream, when said desired data stream is currently being broadcast, and when it is determined that said one capture device is tunable to said channel; and
said processor (310) is adapted to request, in response to said replies, one of said one or more storage devices (20, 21, 24) that stores said data stream desired by the user to provide said desired data stream, when it is determined that said desired data stream was broadcast in the past.

13. A data stream capture device (10, 11, 14) which is connectable to one or more storage devices (20, 21, 24) and to a plurality of user devices (30, 32, 34) via a local area network (5), wherein
said data stream capture device (10, 11, 14) comprises a processor (110) and a tuner (120);
said processor (110) is adapted to broadcast to said user devices, when said data stream capture device (10, 11, 14) is first connected to the local area network, an announce packet including device information relating to functions of said data stream capture device;
said processor (110) is adapted to receive a search command from a said user device (30, 32, 34) and then to transmit a reply containing the device information related to functions of said data stream capture device;
said processor (110) is adapted to cause, in accordance with a received request, said tuner (120) to be tuned to a desired channel and to receive a desired data stream, when it is determined that said tuner is tunable to said channel;
said processor (110) is adapted to transmit, in response to a received request, said data stream in a predetermined format to the said user device (30, 32, 34); and
said processor (110) is adapted to transmit said data stream to the or a said storage device (20, 21, 24) in response to a received request.

14. A capture device (10, 11, 14) according to claim 13, wherein said processor (110) converts received program guide data in a particular format into program guide data in a predetermined format, and transmits the converted program guide data to said user device.

15. A capture device (10, 11, 14) according to claim 13 or 14, wherein, when said tuner (120) is not required to be tuned, elements other than an element required for receiving a command from said local area network are deenergized.

16. A capture device (10, 11, 14) according to any of claims 13, 14 or 15, wherein said capture device receives a reservation of tuning in accordance with the received request.

17. A capture device (10, 11, 14) according to any of claims 13-16, wherein said processor (110) transmits the data stream at one of a plurality of bit rates, in response to the received request,

18. A capture device (10, 11, 14) according to any of claims 13-17, wherein said processor (110) transmits, in accordance with a received request, a description decryption key which is necessary for reproducing the data stream to said user device (30, 32, 34), while a description decryption key is not normally transmitted.

19. A storage device (20, 21, 24) which is connectable to a plurality of data stream capture devices (10, 11, 14) and a plurality of user devices (30, 32, 34) via a local area network (5), wherein
said storage device comprises a processor (210) and a recording medium (220);
said processor (210) is adapted to broadcast to said user devices (30, 32, 34), when said storage device (20, 21, 24) is first connected to the local area network, an announce packet including device information relating to functions of said storage device;
said processor (210) is adapted to receive a search command from a said user device (30, 32, 34) and then to transmit a reply containing the device information related to functions of said storage device;
said processor (210) is adapted to record, in response to a received request, a desired data stream from a said capture device (10, 11, 14) on a said recording medium (220), when it is determined that a data stream can be recorded on said recording medium (220); and
said processor (210) is adapted to provide in response to a received request, a data stream recorded on said recording medium (220), in a predetermined format, to one of said plurality of user devices (30, 32, 34).

20. A storage device (20, 21, 24) according to claim 19, wherein said storage device simultaneously records a plurality of data streams on said recording medium (220), in accordance with a plurality of received requests; and
said processor (210) accepts a new request for recording, unless the number of data streams which can be simultaneously recorded exceeds a threshold.

21. A storage device (20, 21, 24) according to claim 19 or 20, wherein, when it is determined that an amount stored in said storage device reaches a limit during recording of the data stream, said processor requests another storage device to record a subsequent portion of the data stream, via said local area network (5).

22. A storage device (20, 21, 24) according to any of claims 19, 20 or 21, wherein said processor (210) deletes one of the data streams recorded on said recording medium (220) that has a lower priority.

23. A storage device (20, 21, 24) according to any of claims 19 -22, wherein said processor (210) deletes older ones of the data streams recorded on said recording medium (220).

24. A storage device (20, 21, 24) according to any of claims 19 - 23, wherein said storage device receives a request for a reservation of recording in accordance with the received request.

25. A storage device (20, 21, 24) according to any of claims 19-24, wherein said processor (210) transmits the data stream at one of a plurality of bit rates, in response to the received request.

26. A system for capturing, storing and delivering a data stream, comprising a plurality of data stream capture devices (10, 11, 14), one or more storage devices (20, 21, 24) and a plurality of user devices (30, 32, 34), said devices being connectable to each other via a local area network (5), wherein
each said data stream capture device (10, 11, 14) and storage device (20, 21, 24) broadcasts to the said user devices (30, 32, 34), when it first connects to the local area network, an announce packet including device information related to functions of the said data stream capture device or storage device;
a said user device (30, 32, 34) transmits, in response to a user's request, a search command to said plurality of data stream capture devices (10, 11, 14) and said one or more storage devices (20, 21, 24) and then collects the device information related to functions of the capture devices and the storage devices from replies received;
the said user device (30, 32, 34) transmits, in response to said replies, a request to a said capture device (10, 11, 14) in accordance with the user's request;
the said user device (30, 32, 34) transmits, in response to said replies, a request to a said storage device (20, 21, 24) in accordance with the user's request;
when it is determined that one of said plurality of capture devices (10, 11, 14) is tunable to a channel for a desired broadcast program, in accordance with a request from one of said plurality of user devices (30, 32, 34), said one capture device tunes to the channel, and receives and provides a data stream of the program;
in accordance with a request from one of said plurality of user devices (30, 32, 34), one of said one more storage devices (20, 21, 24) records the data stream of the desired program from said one capture device (10, 11, 14) which is tuned to the channel; and
in accordance with a request from one of said plurality of user devices (30, 32, 34), one of said one or more storage devices (20, 21, 24) transmits a desired recorded data stream.

27. A program stored on a storage medium for an information processing device (30, 32, 34) which is connectable to a plurality of data stream capture devices (10, 11, 14) and to one or more storage devices (20, 21, 24) via a local area network (5), said program being operable to effect the steps of:
receiving, from each said data stream capture device (10, 11, 14) and storage device (20, 21, 24), when the said data stream capture device or storage device first connects to the local area network, an announce packet including device information related to functions of the said data stream capture device or storage device;
transmitting, in response to a user's request, a search command to said plurality of data stream capture devices (10, 11, 14) and said one or more storage devices (20, 21, 24) and then collecting the device information related to functions of the capture devices and the storage devices from replies received;
requesting, in response to said replies, one of said plurality of capture devices (10, 11, 14) to be tuned to a desired channel and receive a desired data stream, when it is determined that said one capture device is tunable to said channel; and
requesting, in response to said replies, one of said one or more storage devices (20, 21, 24) to record the data stream from said one capture device, when it is determined that said one storage device can record the data stream.

28. A program according to claim 27, being operable to further effect the step of causing, when said one capture device (10, 11, 14) is to be tuned to another channel, another one of said plurality of capture devices to be tuned to the other channel instead of said one capture device, and then providesing said request to said one capture device.

29. A program according to claim 27 or 28, being operable to further effect the step of requesting another one of said one or more storage devices (20, 21, 24) to record a subsequent portion of the data stream, when an amount stored in said one storage device reaches a limit while said one storage device is recording the data stream.

30. A program according to any of claims 27, 28 or 29, being operable to further effect the step of receiving program guide data in a predetermined format from one of said plurality of capture devices (10, 11, 14).

31. A program according to any of claims 27-30, being operable to further effect the step of requesting said one capture device (10, 11, 14) to transmit a description decryption key which is necessary for reproducing the data stream.

32. A program according to any of claims 27-31, being operable to further effect the step of requesting said one capture device (10, 11, 14) to change a bit rate of a data stream to be transmitted.

33. A program according to any of claims 21 27-32, being operable to further effect the step of requesting said one storage device (20, 21, 24) to change a bit rate of a data stream to be transmitted.

34. A program according to any of claims 27-33, being operable to further effect the step of receiving and reproducing the data stream, and providing the reproduced data stream to a display device.

35. A program stored on a storage medium for a control device (30, 32, 34) which is connectable to a plurality of data stream capture devices (10, 11, 14) and to one or more storage devices (20, 21, 24) via a local area network (5), said program being operable to effect the steps of:
receiving, from each said data stream capture device (10, 11, 14) and storage device (20, 21, 24), when the said data stream capture device or storage device first connects to the local area network, an announce packet including device information related to functions of the said data stream capture device or storage device;
transmitting, in response to a user's request, a search command to said plurality of data stream capture devices (10, 11, 14) and said one or more storage devices (20, 21, 24) and then collecting the device information related to functions of the capture devices and the storage devices from replies received;
requesting, in response to said replies, one of said plurality of capture devices (10, 11, 14) to be tuned to a channel on which a data stream desired by a user can be received and to receive and provide said desired data stream, when said desired data stream is currently being broadcast, and when it is determined that said one capture device is tunable to said channel; and
requesting, in response to said replies, one of said one or more storage devices (20, 21, 24) that stores said data stream desired by the user to provide said desired data stream, when it is determined that said desired data stream was broadcast in the past.

36. A program stored on a storage medium for a data stream capture device (10, 11, 14) which is connectable to one or more storage devices (20, 21, 24) and to a plurality of user devices (30, 32, 34) via a local area network (5), said program being operable to effect the steps of:
broadcasting to the said user devices (30, 32, 34), when the said data stream capture device (10, 11, 14) first connects to the local area network, an announce packet including device information relating to functions of said data stream capture device;
receiving a search command from a said user device and then transmitting a reply containing the device information related to functions of said data stream capture device;
causing, in accordance with a received request, a tuner (120) of said data stream capture device (10, 11, 14) to be tuned to a desired channel and to receive a desired data stream, when it is determined that said tuner is tunable to said channel;
transmitting, in response to a received request, said data stream in a predetermined format to the said user device (30, 32, 34); and
transmitting said data stream to a said storage device (20, 21, 24) in response to a received request.

37. A program according to claim 36, being operable to further effect the step of converting received program guide data in a particular format into program guide data in a predetermined format, and transmitting the converted program guide data to said user device (30, 32, 34).

38. A program according to claim 36 or 37, being operable to further effect the step of receiving a reservation of tuning in accordance with the received request.

39. A program according to any of claims 36, 37 or 38, being operable to further effect the step of transmitting the data stream at one of a plurality of bit rates, in response to the received request,

40. A program according to any of claims 36-39, being operable to further effect the step of transmitting, in accordance with a received request, a description decryption key which is necessary for reproducing the data stream to said user device (30, 32, 34), while a description decryption key is not normally transmitted.

41. A program stored on a storage medium for a storage device (20, 21, 24) which is connectable to a plurality of data stream capture devices (10, 11, 14) and to a plurality of user devices (30, 32, 34) via a local area network (5), said program being operable to effect the steps of:
broadcasting to the said user devices (30, 32, 34), when said storage device (20, 21, 24) first connects to the local area network, an announce packet including device information relating to functions of said storage device;
receiving a search command from a said user device (30, 32, 34) and then transmitting a reply containing the device information related to functions of said storage device;
recording, in response to a received request, a desired data stream from a said capture device (10, 11, 14) on a recording medium (220), when it is determined that a data stream can be recorded on said recording medium; and
providing, in response to a received request, a data stream recorded on said recording medium (220), in a predetermined format, to one of said plurality of user devices (30, 32, 34).

42. A program according to claim 41, being operable to further effect the steps of:
accepting a new request for recording, unless the number of data streams which can be simultaneously recorded exceeds a threshold; and
simultaneously recording a plurality of data streams on said recording medium (220), in accordance with a plurality of received requests.

43. A program according to claim 41 or 42, being operable to further effect the step of requesting another storage device (20, 21, 24) to record a subsequent portion of the data stream, via said local area network (5), when it is determined that an amount stored in said first storage device reaches a limit during recording of the data stream.

44. A program according to any of claims 41, 42 or 43, being operable to further effect the step of receiving a request for a reservation of recording in accordance with the received request.

45. A program according to any of claims 41-44, being operable to further effect the step of transmitting, in response to the received request, the data stream at one of a plurality of bit rates.

46. In an information processing device (30, 32, 34) which is connectable to a plurality of data stream capture devices (10, 11, 14) and to one or more storage devices (20, 21, 24) via a local area network (5), a method for controlling said plurality of data stream capture devices (10, 11, 14) and said one or more storage devices, said method comprising the steps of:
receiving, from each said data stream capture device (10, 11, 14) and storage device (20, 21, 24), when the said data stream capture device or storage device first connects to the local area network, an announce packet including device information related to functions of the said data stream capture device or storage device;
transmitting, in response to a user's request, a search command to said plurality of data stream capture devices (10, 11, 14) and said one or more storage devices (20, 21, 24) and then collecting the device information related to functions of the capture devices and the storage devices from replies received;
requesting, in response to said replies, one of said plurality of capture devices (10, 11, 14) to be tuned to a desired channel and receive a desired data stream, when it is determined that said one capture device is tunable to said channel; and
requesting, in response to said replies, one of said one or more storage devices (20, 21, 24) to record the data stream from said one capture device, when it is determined that said one storage device can record the data stream.

47. A method according to claim 46, further comprising the step of causing, when said one capture device (10, 11, 14) is to be tuned to another channel, another one of said plurality of capture devices to be tuned to said other channel instead of said one capture device, and then providing said request to said one capture device.

48. A method according to claim 46 or 47, further comprising the step of requesting another one of said one or more storage devices (20, 21, 24) to record a subsequent portion of the data stream, when an amount stored in said one storage device reaches a limit while said one storage device is recording the data stream.

49. In an information processing device (30, 32, 34) which is connectable to a plurality of data stream capture devices (10, 11, 14) and to one or more storage devices (20, 21, 24) via a local area network (5), a method for controlling said plurality of data stream capture devices and said one or more storage devices, said method comprising the steps of:
receiving, from each said data stream capture device (10, 11, 14) and storage device (20, 21, 24), when the said data stream capture device or storage device first connects to the local area network, an announce packet including device information related to functions of the said data stream capture device or storage device;
transmitting, in response to a user's request, a search command to said plurality of data stream capture devices (10, 11, 14) and said one or more storage devices (20, 21, 24) and then collecting the device information related to functions of the capture devices and the storage devices from replies received;
in response to said replies, requesting one of said plurality of capture devices (10, 11, 14) to be tuned to a channel on which a data stream desired by a user can be received and to receive and provide said desired data stream, when said desired data stream is currently being broadcast, and when it is determined that said one capture device is tunable to said channel; and
in response to said replies, requesting one of said one or more storage devices (20, 21, 24) that stores said data stream desired by the user to provide said desired data stream, when it is determined that said desired data stream was broadcast in the past.

50. In a data stream capture device (10, 11, 14) which is connectable to one or more storage devices (20, 21, 24) and to a plurality of user devices (30, 32, 34) via a local area network (5), a method of capturing and transmitting a data stream, said method comprising the steps of:
broadcasting to the said user devices (30, 32, 34), when the said data stream capture device (10, 11, 14) first connects to the local area network, an announce packet including device information relating to functions of said data stream capture device;
receiving a search command from a said user device (30, 32, 34) and then transmitting a reply containing the device information related to functions of said data stream capture device;
causing, in accordance with a received request, a tuner (120) of said data stream capture device to be tuned to a desired channel and to receive a desired data stream, when it is determined that said tuner is tunable to said channel;
transmitting, in response to a received request, said data stream in a predetermined format to the said user device (30, 32, 34); and
transmitting said data stream to a said storage device (20, 21, 24) in response to a received request.

51. A method according to claim 50, further comprising the step of converting received program guide data in a particular format into program guide data in a predetermined format, and transmitting the converted program guide data to said user device (30, 32, 34).

52. A method according to claim 50 or 51, further comprising the step of transmitting the data stream at one of a plurality of bit rates, in response to a received request.

53. A method according to any of claims 50, 51 or 52, further comprising the step of transmitting, in accordance with a received request, a description decryption key which is necessary for reproducing the data stream to said user device (30, 32, 34), while a description decryption key is not normally transmitted.

54. In a storage device (20, 21, 24) which is connectable to a plurality of data stream capture devices (10, 11, 14) and to a plurality of user devices (30, 32, 34) via a local area network (5), a method of recording and providing a data stream, said method comprising the steps of:
broadcasting to the said user devices (30, 32, 34), when said storage device (20, 21, 24) first connects to the local area network, an announce packet including device information relating to functions of said storage device;
receiving a search command from a said user device (30, 32, 34) and then transmitting a reply containing the device information related to functions of said storage device;
recording, in response to a received request, a desired data stream from a said capture device (10, 11, 14) on a recording medium (220), when it is determined that a data stream can be recorded on said recording medium; and
providing, in response to a received request, a data stream recorded on said recording medium (220), in a predetermined format, to one of said plurality of user devices (30, 32, 34).

55. A method according to claim 54, further comprising the steps of:
accepting a new request for recording, unless the number of data streams which can be simultaneously recorded exceeds a threshold; and
simultaneously recording a plurality of data streams on said recording medium (220), in accordance with a plurality of received requests.

56. A method according to claim 54 or 55, further comprising the step of requesting another storage device to record a subsequent portion of the data stream, via said local area network (5), when it is determined that an amount stored in said first storage device (20, 21, 24) reaches a limit during recording of the data stream.

57. A method according to claim 54, 55 or 56, further comprising the step of receiving a request for a reservation of recording in accordance with the received request.

## Patentansprüche

1. Eine Steuervorrichtung (30, 32, 34), welche über ein lokales Netzwerk (5) an eine Mehrzahl von Datenstromerfassungsvorrichtungen (10, 11, 14) und eine oder mehrere Speichervorrichtungen (20, 21, 24) anschließbar ist, wobei
die Steuervorrichtung einen Prozessor (310) umfasst;
der Prozessor (310) eingerichtet ist, von jeder Datenstromerfassungsvorrichtung (10, 11, 14) und Speichervorrichtung (20, 21, 24), wenn sich die Datenstromerfassungsvorrichtung oder Speichervorrichtung zuerst mit dem lokalen Netzwerk verbindet, ein Ankündigungspaket zu empfangen, welches eine Vorrichtungsinformation der Datenstromerfassungsvorrichtung oder der Speichervorrichtung umfasst;
der Prozessor (310) eingerichtet ist, in Antwort auf eine Benutzeraufforderung einen Suchbefehl an die Mehrzahl von Datenstromerfassungsvorrichtungen (10, 11, 14) und die eine oder mehreren Speichervorrichtungen (20, 21, 24) zu übertragen und die Vorrichtungsinformation in Bezug auf Funktionen der Erfassungsvorrichtungen und der Speichervorrichtungen aus empfangenen Antworten zu erheben;
der Prozessor (310) eingerichtet ist, in Antwort auf die Antworten eine der Mehrzahl von Erfassungsvorrichtungen (10, 11, 14) aufzufordern, sich auf einen gewünschten Kanal abzustimmen und einen gewünschten Datenstrom zu empfangen, wenn bestimmt wird, dass diese eine Erfassungsvorrichtung auf diesen Kanal abstimmbar ist; und
der Prozessor (310) eingerichtet ist, in Antwort auf die Antworten eine der einen oder mehreren Speichervorrichtungen (20, 21, 24) aufzufordern, den Datenstrom von der einen Erfassungsvorrichtung (10, 11, 14) aufzuzeichnen, wenn bestimmt wird, dass diese eine Speichervorrichtung den Datenstrom aufzeichnen kann.

2. Eine Steuervorrichtung (30, 32, 34) nach Anspruch 1, wobei, wenn diese eine Erfassungsvorrichtung (10, 11, 14) auf einen anderen Kanal abgestimmt werden soll, der Prozessor (310) eine andere der Mehrzahl von Erfassungsvorrichtungen dazu veranlasst, anstelle der einen Erfassungsvorrichtung auf den anderen Kanal abgestimmt zu werden, und die Aufforderung dann dieser einen Erfassungsvorrichtung bereitstellt.

3. Eine Steuervorrichtung (30, 32, 34) nach Anspruch 1 oder 2, wobei, wenn eine Menge, die in dieser einen Speichervorrichtung (20, 21, 24) gespeichert ist, ein Limit erreicht, während diese eine Speichervorrichtung den Datenstrom aufzeichnet, der Prozessor (310) eine andere der einen oder mehreren Speichervorrichtungen auffordert, einen nachfolgenden Anteil des Datenstroms aufzuzeichnen.

4. Eine Steuervorrichtung (30, 32, 34) nach Anspruch 1, 2 oder 3, wobei der Datenstrom ein Datenstrom eines Programms ist, welches eingeplant ist, um in der Zukunft gesendet zu werden.

5. Eine Steuervorrichtung (30, 32, 34) nach einem der Ansprüche 1 bis 4, wobei der Prozessor Programmführungsdaten in einem vorbestimmten Format von einer der Mehrzahl von Erfassungsvorrichtungen (10, 11, 14) empfängt.

6. Eine Steuervorrichtung (30, 32, 34) nach einem der Ansprüche 1 bis 5, wobei der Prozessor diese eine Erfassungsvorrichtung (10, 11, 14) dazu auffordert, einen Decodierungsschlüssel zu übertragen, welcher zum Reproduzieren des Datenstroms notwendig ist.

7. Eine Steuervorrichtung (30, 32, 34) nach einem der Ansprüche 1 bis 6, wobei der Prozessor (310) diese eine Erfassungsvorrichtung (10, 11, 14) dazu auffordert, eine Bitrate eines Datenstroms, der zu übertragen ist, zu verändern.

8. Eine Steuervorrichtung (30, 32, 34) nach einem der Ansprüche 1 bis 7, wobei der Prozessor (310) diese eine Speichervorrichtung (20, 21, 24) dazu auffordert, eine Bitrate eines Datenstroms, der zu übertragen ist, zu verändern.

9. Eine Steuervorrichtung (30, 32, 34) nach einem der Ansprüche 1 bis 8, wobei der Prozessor (310) den Datenstrom empfängt und reproduziert, und den reproduzierten Datenstrom einer Anzeigevorrichtung (306, 326, 346) bereitstellt.

10. Eine Steuervorrichtung (30, 32, 34) nach einem der Ansprüche 1 bis 9, wobei eine Reproduzierungsvorrichtung (548), welche an das lokale Netzwerk (5) anschließbar ist, mit der Steuervorrichtung verbunden ist.

11. Eine Steuervorrichtung (30, 32, 34) nach einem der Ansprüche 1 bis 10, wobei die Benutzeraufforderung über das lokale Netzwerk (5) empfangen wird.

12. Eine Steuervorrichtung (30, 32, 34), welche über ein lokales Netzwerk (5) an eine Mehrzahl von Datenstromerfassungsvorrichtungen (10, 11, 14) und an eine oder mehrere Speichervorrichtungen (20, 21, 24) anschliei3bar ist, wobei
die Steuervorrichtung einen Prozessor (310) umfasst;
der Prozessor (310) eingerichtet ist, von jeder Datenstromerfassungsvorrichtung (10, 11, 14) und Speichervorrichtung (20, 21, 24), wenn sich die Datenstromerfassungsvorrichtung oder Speichervorrichtung zuerst mit dem lokalen Netzwerk verbindet, ein Ankündigungspaket zu empfangen, welches eine Vorrichtungsinformation der Datenstromerfassungsvorrichtung oder der Speichervorrichtung umfasst;
der Prozessor (310) eingerichtet ist, in Antwort auf eine Benutzeraufforderung einen Suchbefehl an die Mehrzahl von Datenstromerfassungsvorrichtungen (10, 11, 14) und die eine oder mehreren Speichervorrichtungen (20, 21, 24) zu übertragen und die Vorrichtungsinformation in Bezug auf Funktionen der Erfassungsvorrichtungen und der Speichervorrichtungen aus empfangenen Antworten zu erheben;
der Prozessor (310) eingerichtet ist, in Antwort auf die Antworten eine der Mehrzahl von Erfassungsvorrichtungen (10, 11, 14) aufzufordern, auf einen Kanal abgestimmt zu werden, auf welchem ein von einem Benutzer gewünschter Datenstrom empfangen werden kann, und den gewünschten Datenstrom zu empfangen und bereitzustellen, wenn der gewünschte Datenstrom momentan gesendet wird und wenn bestimmt wird, dass diese eine Erfassungsvorrichtung auf diesen Kanal abstimmbar ist; und
der Prozessor (310) eingerichtet ist, in Antwort auf diese Antworten eine dieser einen oder mehreren Speichervorrichtungen (20, 21, 24), die den von dem Benutzer gewünschten Datenstrom speichert, dazu aufzufordern, den gewünschten Datenstrom bereitzustellen, wenn bestimmt wird, dass der gewünschte Datenstrom in der Vergangenheit gesendet wurde.

13. Eine Datenstromerfassungsvorrichtung (10, 11, 14), welche über ein lokales Netzwerk (5) an eine oder mehrere Speichervorrichtungen (20, 21, 24) und an eine Mehrzahl von Benutzervorrichtungen (30, 32, 34) anschließbar ist, wobei
die Datenstromerfassungsvorrichtung (10, 11, 14) einen Prozessor (110) und eine Abstimmungsvorrichtung (120) umfasst;
der Prozessor (110) eingerichtet ist, ein Ankündigungspaket, welches Vorrichtungsinformation in Bezug auf Funktionen der Datenstromerfassungsvorrichtung umfasst, an die Benutzervorrichtungen zu senden, wenn die Datenstromerfassungsvorrichtung (10, 11, 14) zuerst mit dem lokalen Netzwerk verbunden wird;
der Prozessor (110) eingerichtet ist, einen Suchbefehl von einer Benutzervorrichtung (30, 32, 34) zu empfangen und dann eine Antwort zu übertragen, welche die Vorrichtungsinformation in Bezug auf Funktionen dieser Datenstromerfassungsvorrichtung enthält;
der Prozessor (110) eingerichtet ist, in Übereinstimmung mit einer empfangenen Aufforderung die Abstimmungsvorrichtung (120) dazu zu veranlassen, auf einen gewünschten Kanal abgestimmt zu werden und einen gewünschten Datenstrom zu empfangen, wenn bestimmt wird, dass die Abstimmungsvorrichtung auf diesen Kanal abstimmbar ist;
der Prozessor (110) eingerichtet ist, in Antwort auf eine empfangene Aufforderung den Datenstrom in einem vorbestimmten Format an diese Benutzervorrichtung (30, 32, 34) zu übertragen; und
der Prozessor (110) eingerichtet ist, den Datenstrom an die oder eine Speichervorrichtung (20, 21, 24) zu übertragen, in Antwort auf eine empfangene Aufforderung.

14. Eine Erfassungsvorrichtung (10, 11, 14) nach Anspruch 13, wobei der Prozessor (110) empfangene Pragrammführungsdaten in ein spezielles Format in Programmführungsdaten in einem vorbestimmten Format konvertiert und die konvertierten Programmführungsdaten an die Benutzervorrichtung überträgt.

15. Eine Erfassungsvorrichtung (10, 11, 14) nach Anspruch 13 oder 14, wobei, wenn die Abstimmungevorrichtung (120) nicht abgestimmt werden muss, andere Elemente als ein Element, das zum Empfangen eines Befehls von dem lokalen Netzwerk erforderlich ist, abgeschaltet werden.

16. Eine Erfassungsvorrichtung (10, 11, 14) nach einem der Ansprüche 13, 14 oder 15, wobei die Erfassungsvorrichtung eine Abstimmungsreservierung in Übereinstimmung mit der empfangenen Aufforderung empfängt.

17. Eine Erfassungsvorrichtung (10, 11, 14) nach einem der Ansprüche 13 bis 16, wobei der Prozessor (110) den Datenstrom bei einer von einer Mehrzahl von Bitraten überträgt, in Antwort auf die empfangene Aufforderung.

18. Eine Erfassungsvorrichtung (10, 11, 14) nach einem der Ansprüche 13 bis 17, wobei der Prozessor (110) in Übereinstimmung mit einer empfangenen Aufforderung einen Beschreibungsdecodierungsschlüssel, der zum Reproduzieren des Datenstroms notwendig ist, an die Benutzervorrichtung (30, 32, 34) überträgt, während ein Beschreibungsdecodierungsschlüssel in der Regel nicht übertragen wird.

19. Eine Speichervorrichtung (20, 21, 24), welche über ein lokales Netzwerk (5) an eine Mehrzahl von Datenstromerfassungsvorrichtungen (10, 11, 14) und eine Mehrzahl von Benutzez-vorrichtungen (30, 32, 34) anschließbar ist, wobei
die Speichervorrichtung einen Prozessor (210) und ein Aufzeichnungsmedium (220) umfasst;
der Prozessor (210) eingerichtet ist, ein Ankündigungspaket, welches Vorrichtungsinformation in Bezug auf Funktionen der Speichervorrichtung umfasst, an die Benutzervorrichtungen (30, 32, 34) zu senden, wenn die Speichervorrichtung (20, 21, 24) zuerst an das lokale Netzwerk angeschlossen wird;
der Prozessor (210) eingerichtet ist, einen Suchbefehl von einer solchen Benutzervorrichtung (30, 32, 34) zu empfangen und dann eine Antwort zu übertragen, welche die Vorrichtungsinformation in Bezug auf Funktionen der Speichervorrichtung enthält;
der Prozessor (210) eingerichtet ist, in Antwort auf eine empfangene Aufforderung einen gewünschten Datenstrom von einer solchen Erfassungsvorrichtung (10, 11, 14) auf einem solchen Aufzeichnungsmedium (220) aufzuzeichnen, wenn bestimmt wird, dass ein Datenstrom auf dem Aufzeichnungsmedium (220) aufgezeichnet werden kann; und
der Prozessor (210) eingerichtet ist, in Antwort auf eine empfangene Aufforderung einen Datenstrom, der auf dem Aufzeichnungsmedium (220) aufgezeichnet ist, in einem vorbestimmten Format einer der Mehrzahl von Benutzervorrichtung (30, 32, 34) bereitzustellen.

20. Eine Speichervorrichtung (20, 21, 24) nach Anspruch 19, wobei die Speichervorrichtung gleichzeitig eine Mehrzahl von Datenströmen auf dem Aufzeichnungsmedium (220) aufzeichnet, in Übereinstimmung mit einer Mehrzahl empfangener Aufforderungen; und
der Prozessor (210) eine neue Aufforderung zum Aufzeichnen akzeptiert, sofern die Anzahl von Datenströmen, welche gleichzeitig aufgezeichnet werden können, nicht einen Schwellenwert überschreitet.

21. Eine Speichervorrichtung (20, 21, 24) nach Anspruch 19 oder 20, wobei, wenn bestimmt wird, dass eine Menge, welche in der Speichervorrichtung gespeichert ist, während einem Aufzeichnen des Datenstroms ein Limit erreicht, der Prozessor eine weitere Speichervorrichtung dazu auffordert, einen nachfolgenden Anteil des Datenstroms aufzuzeichnen, über das lokale Netzwerk (5).

22. Eine Speichervorrichtung (20, 21, 24) nach einem der Ansprüche 19, 20 oder 21, wobei der Prozessor (210) einen der Datenströme, die auf dem Aufzeichnungsmedium (220) aufgezeichnet sind, löscht, der eine niedrigere Priorität besitzt.

23. Eine Speichervorrichtung (20, 21, 24) nach einem der Ansprüche 19 bis 22, wobei der Prozessor (210) ältere der Datenströme, die auf dem Aufzeichnungsmedium (220) aufgezeichnet sind, löscht.

24. Eine Speichervorrichtung (20, 21, 24) nach einem der Ansprüche 19 bis 23, wobei die Speichervorrichtung eine Aufforderung für eine Aufzeichnungsreservierung in Übereinstimmung mit der empfangenen Aufforderung empfängt.

25. Eine Speichervorrichtung (20, 21, 24) nach einem der Ansprüche 19 bis 24, wobei der Prozessor (210) den Datenstrom bei einer von einer Mehrzahl von Bitraten überträgt, in Antwort auf die empfangene Aufforderung.

26. Ein System zum Erfassen, Speichern und Liefern eines Datenstroms, umfassend eine Mehrzahl von Datenstromerfassungsvorrichtungen (10, 11, 14), eine oder mehrere Speichervorrichtungen (20, 21, 24) und eine Mehrzahl von Benutzervorrichtungen (30, 32, 34), wobei die Vorrichtungen über ein lokales Netzwerk (5) aneinander anschließbar sind und wobei
jede Datenstromerfassungsvorrichtung (10, 11, 14) und Speichervorrichtung (20, 21, 24) ein Ankündigungspaket, welches Vorrichtungsinformation in Bezug auf Funktionen dieser Datenstromerfassungsvorrichtung oder Speichervorrichtung umfasst, an diese Benutzervorrichtungen (30, 32, 34) sendet, wenn sie sich zuerst mit dem lokalen Netzwerk verbinden;
eine solche Benutzervorrichtung (30, 32, 34) in Antwort auf eine Benutzeraufforderung einen Suchbefehl an die Mehrzahl von Datenstromerfassungsvorrichtungen (10, 11, 14) und die eine oder mehreren Speichervorrichtungen (20, 21, 24) überträgt, und dann die Vorrichtungsinformation in Bezug auf Funktionen der Erfassungsvorrichtungen und der Speichervorrichtungen aus empfangenen Antworten erhebt;
die Benutzervorrichtung (30, 32, 34) in Antwort auf solche Antworten eine Aufforderung an eine solche Erfassungsvorrichtung (10, 11, 14) in Übereinstimmung mit der Benutzeraufforderung überträgt;
die Benutzervorrichtung (30, 32, 34) in Antwort auf die Antworten eine Aufforderung an eine solche Speichervorrichtung (20, 21, 24) in Übereinstimmung mit der Benutzeraufforderung überträgt;
wenn bestimmt wird, dass eine der Mehrzahl von Erfassungsvorrichtungen (10, 11, 14) auf einen Kanal für ein gewünschtes Sendeprogramm abstimmbar ist, in Übereinstimmung mit einer Aufforderung von einer der Mehrzahl von Benutzervorrichtungen (30, 32, 34), sich diese eine Erfassungsvorrichtung auf den Kanal abstimmt und einen Datenstrom des Programms empfängt und bereitstellt;
in Übereinstimmung mit einer Aufforderung von einer der Mehrzahl von Benutzervorrichtungen (30, 32, 34), eine der einen oder mehreren Speichervorrichtungen (20, 21, 24) den Datenstrom des gewünschten Programms von der einen Erfassungsvorrichtung (10, 11, 14), welche auf den Kanal abgestimmt ist, aufzeichnet; und
in Übereinstimmung mit einer Aufforderung von einer der Mehrzahl von Benutzervorrichtungen (30, 32, 34), eine der einen oder mehreren Speichervorrichtungen (20, 21, 24) einen gewünschten, aufgezeichneten Datenstrom überträgt.

27. Ein Programm, welches auf einem Speichermedium für eine Informationsverarbeitungsvorrichtung (30, 32, 34) gespeichert ist, welche über ein lokales Netzwerk (5) an eine Mehrzahl von Datenstromerfassungsvorrichtungen (10, 11, 14) und an eine oder mehrere Speichervorrichtungen (20, 21, 24) anschließbar ist, wobei das Programm betriebsfähig ist, um die Schritte auszuführen:
Empfangen, von jeder Datenstromerfassungsvorrichtung (10, 11, 14) und Speichervorrichtung (20, 21, 24), wenn sich diese Datenstromerfassungsvorrichtung oder Speichervorrichtung zuerst mit dem lokalen Netzwerk verbindet, eines Ankündigungspakets, welches Vorrichtungsinformation in Bezug auf Funktionen dieser Datenstromerfassungsvorrichtung oder Speichervorrichtung umfasst;
Übertragen, in Antwort auf eine Benutzeraufforderung, eines Suchbefehls an die Mehrzahl von Datenstromerfassungsvorrichtungen (10, 11, 14) und die eine oder mehreren Speichervorrichtungen (20, 21, 24), und dann Erheben der Vorrichtungsinformation in Bezug auf Funktionen der Erfassungsvorrichtungen und der Speichervorrichtungen aus empfangenen Antworten;
Auffordern, in Antwort auf die Antworten, einer der Mehrzahl von Erfassungsvorrichtungen (10, 11, 14), auf einen gewünschten Kanal abgestimmt zu werden, und Empfangen eines gewünschten Datenstroms, wenn bestimmt wird, dass diese eine Erfassungsvorrichtung auf den Kanal abstimmbar ist; und
Auffordern, in Antwort auf die Antworten, einer der einen oder mehreren Speichervorrichtungen (20, 21, 24), den Datenstrom von der einen Erfassungsvorrichtungen aufzuzeichnen, wenn bestimmt wird, dass die eine Speichervorrichtung den Datenstrom aufzeichnen kann.

28. Ein Programm nach Anspruch 27, welches betriebsfähig ist, um des weiteren den Schritt des Veranlassens auszuführen, wenn diese eine Erfassungsvorrichtung (10, 11, 14) auf einen anderen Kanal abgestimmt werden soll, einer weiteren der Mehrzahl von Erfassungsvorrichtungen, anstelle der einen Erfassungsvorrichtung auf den anderen Kanal abgestimmt zu werden, und dann Bereitstellen dieser Aufforderung an diese eine Erfassungsvorrichtung.

29. Ein Programm nach Anspruch 27 oder 28, welches betriebsfähig ist, um des Weiteren den Schritt des Aufforderns einer weiteren der einen oder mehreren Speichervorrichtungen (20, 21, 24) auszuführen, um einen nachfolgenden Anteil des Datenstroms aufzuzeichnen, wenn eine Menge, die in der einen Speichervorrichtung gespeichert ist, ein Limit erreicht, während diese eine Speichervorrichtung den Datenstrom aufzeichnet.

30. Ein Programm nach einem der Ansprüche 27, 28 oder 29, welches betriebsfähig ist, um des Weiteren den Schritt des Empfangens von Programmführungsdaten in einem vorbestimmten Format auszuführen, von einer der Mehrzahl von Erfassungsvorrichtungen (10, 11, 14).

31. Ein Programm nach einem der Ansprüche 27 bis 30, welches betriebsfähig ist, um des Weiteren den Schritt des Aufforderns der einen Erfassungsvorrichtung (10, 11, 14) auszuführen, um einen Beschreibungsdecodierungsschlüssel zu übertragen, welcher zum Reproduzieren des Datenstroms notwendig ist.

32. Ein Programm nach einem der Ansprüche 27 bis 31, welches betriebsfähig ist, um des Weiteren den Schritt des Aufforderne der einen Erfassungsvorrichtung (10, 11, 14) auszuführen, um eine Bitrate eines Datenstroms zu verändern, der übertragen werden soll.

33. Ein Programm nach einem der Ansprüche 27 bis 32, welches betriebsfähig ist, um des Weiteren den Schritt des Aufforderns der einen Speichervorrichtung (20, 21, 24) auszuführen, um eine Bitrate eines Datenstroms zu verändern, der übertragen werden soll.

34. Ein Programm nach einem der Ansprüche 27 bis 33, welches betriebsfähig ist, um des Weiteren den Schritt des Empfangens und Reproduzierens des Datenstroms auszuführen und des Bereitstellens des reproduzierten Datenstroms an eine Anzeigevorrichtung.

35. Ein Programm, welches auf einem Speichermedium für eine Steuervorrichtung (30, 32, 34) gespeichert ist, welche über ein lokales Netzwerk (5) an eine Mehrzahl von Datenstromerfassungsvorrichtungen (10, 11, 14) und an eine oder mehrere Speichervorrichtungen (20, 21, 24) anschließbar ist, wobei das Programm betriebsfähig ist, um die Schritte auszuführen:
Empfangen, von jeder Datenstromerfassungsvorrichtung (10, 11, 14) und Speichervorrichtung (20, 21, 24), wenn sich diese Datenstromerfassungsvorrichtung oder Speichervorrichtung zuerst mit dem lokalen Netzwerk verbindet, eines Ankündigungspakets, welches Vorrichtungsinformation in Bezug auf Funktionen dieser Datenstromerfassungsvorrichtung oder Speichervorrichtung umfasst;
Übertragen, in Antwort auf eine Benutzeraufforderung, eines Suchbefehls an die Mehrzahl von Datenstromerfassungsvorrichtungen (10, 11, 14) und die eine oder mehreren Speichervorrichtungen (20, 21, 24), und dann Erheben der Vorrichtungsinformation in Bezug auf Funktionen der Erfassungsvorrichtungen und der Speichervorrichtungen aus empfangenen Antworten;
Auffordern, in Antwort auf die Antworten, einer der einen oder mehreren Speichervorrichtungen (20, 21, 24), welche den Datenstrom speichert, der von dem Benutzer gewünscht ist, um den gewünschten Datenstrom bereitzustellen, wenn bestimmt wird, dass der gewünschte Datenstrom in der Vergangenheit gesendet wurde.

36. Ein Programm, welches auf einem Speichermedium für eine Datenstromerfassungsvorrichtung (10, 11, 14) gespeichert ist, die über ein lokales Netzwerk (5) an eine oder mehrere Speichervorrichtungen (20, 21, 24) und an eine Mehrzahl von Benutzervorrichtungen (30, 32, 34) anschließbar ist, wobei das Programm betriebsfähig ist, um die Schritte auszuführen:
Senden an die Benutzervorrichtungen (30, 32, 34), wenn sich die Datenstromerfassungsvorrichtung (10, 11, 14) zuerst mit dem lokalen Netzwerk verbindet, eines Ankündigungspakets, welches Vorrichtungsinformation in Bezug auf Funktionen der Datenstromerfassungsvorrichtung umfasst;
Empfangen eines Suchbefehls von einer solchen Benutzervorrichtung und dann Übertragen einer Antwort, welche die Vorrichtungsinformation in Bezug auf Funktionen der Datenstromerfassungsvorrichtung enthält;
veranlassen, in Übereinstimmung mit einer empfangenen Aufforderung, einer Abstimmungsvorrichtung (120) der Datenstromerfassungsvorrichtung (10, 11, 14), auf einen gewünschten Kanal abgestimmt zu werden und einen gewünschten Datenstrom zu empfangen, wenn bestimmt wird, dass die Abstimmungsvorrichtung auf diesen Kanal abstimmbar ist;
Übertragen, in Antwort auf eine empfangene Aufforderung, des Datenstroms in einem vorbestimmten Format an diese Benutzervorrichtung (30, 32, 34); und
Übertragen des Datenstroms an eine solche Speichervorrichtung (20, 21, 24) in Antwort auf eine empfangene Aufforderung.

37. Ein Programm nach Anspruch 36, welches betriebsfähig ist, um des Weiteren den Schritt des Konvertierens empfangener Programmführungsdaten in ein spezielles Format auszuführen, in Programmführungsdaten in einem vorbestimmten Format, und übertragen der konvertierten Programmführungsdaten an die Benutzervorrichtung (30, 32, 34).

38. Ein Programm nach Anspruch 36 oder 37, welches betriebsfähig ist, um des Weiteren den Schritt des Empfangens einer Abstimmungsreservierung in Übereinstimmung mit der empfangenen Aufforderung auszuführen.

39. Ein Programm nach einem der Ansprüche 36, 37 oder 38, welches betriebsfähig ist, um des Weiteren den schritt des Übertragens des Datenstroms bei einer von einer Mehrzahl von Bitraten auszuführen, in Antwort auf die empfangene Aufforderung.

40. Ein Programm nach einem der Ansprüche 36 bis 39, welches betriebsfähig ist, um des Weiteren den Schritt des Übertragens auszuführen, in Übereinstimmung mit einer empfangenen Aufforderung, eines Beschreibungsdecodierungsschlüssels, welcher zum Reproduzieren des Datenstroms notwendig ist, an die Benutzervorrichtung (30, 32, 34), während ein Beschreibungsdecodierungsschlüssel in der Regel nicht übertragen wird.

41. Ein Programm, welches auf einem Speichermedium für eine Speichervorrichtung (20, 21, 24) gespeichert ist, die über ein lokales Netzwerk (5) an eine Mehrzahl von Datenstromerfassungsvorrichtungen (10, 11, 14) und an eine Mehrzahl von Benutzervorrichtungen (30, 32, 34) anschließbar ist, wobei das Programm betriebsfähig ist, um die Schritte auszuführen:
Senden an die Benutzervorrichtungen (30, 32, 34), wenn sich die Speichervorrichtung (20, 21, 24) zuerst an das lokale Netzwerk anschließt, eines Ankündigungspakets, welches Vorrichtungsinformation in Bezug auf Funktionen der Speichervorrichtung umfasst;
Empfangen eines Suchbefehls von einer solchen Benutzervorrichtung (30, 32, 34) und dann Übertragen einer Antwort, welche die Vorrichtungsinformation in Bezug auf Funktionen der Speichervorrichtung enthält;
Aufzeichnen, in Antwort auf eine empfangene Aufforderung, eines gewünschten Datenstroms von einer solchen Erfassungsvorrichtung (10, 11, 14) auf ein Aufzeichnungsmedium (220), wenn bestimmt wird, dass ein Datenstrom auf dem Aufzeichnungsmedium aufgezeichnet werden kann; und
Bereitstellen, in Antwort auf eine empfangene Aufforderung, eines Datenstroms, welcher auf dem Aufzeichnungsmedium (220) aufgezeichnet ist, in einem vorbestimmten Format, an eine der Mehrzahl von Benutzervorrichtungen (30, 32, 34).

42. Ein Programm nach Anspruch 41, welches betriebsfähig ist, um des Weiteren die Schritte auszuführen:
Annehmen einer neuen Aufforderung zum Aufzeichnen, sofern nicht die Anzahl von Datenströmen, welche gleichzeitig aufgezeichnet werden können, einen Schwellenwert überschreitet; und
gleichzeitiges Aufzeichnen einer Mehrzahl von Datenströmen auf dem Aufzeichnungsmedium (220), in Übereinstimmung mit einer Mehrzahl empfangener Aufforderungen.

43. Ein Programm nach Anspruch 41 oder 42, welches betriebsfähig ist, um des Weiteren den Schritt des Aufforderns einer weiteren Speichervorrichtung (20, 21, 24) auszuführen, um einen nachfolgenden Anteil des Datenstroms aufzuzeichnen, über das lokale Netzwerk (5), wenn bestimmt wird, dass eine Menge, welche in der ersten Speichervorrichtung gespeichert ist, während einem Aufzeichnen des Datenstroms ein Limit erreicht.

44. Ein Programm nach einem der Ansprüche 41, 42 oder 43, welches betriebsfähig ist, um des Weiteren den Schritt des Empfangens einer Aufforderung für eine Aufzeichnungsreservierung in Übereinstimmung mit der empfangenen Aufforderung auszuführen.

45. Ein Programm nach einem der Ansprüche 41 bis 44, welches betriebsfähig ist, um des Weiters den Schritt des Übertragens, in Antwort auf die empfangene Aufforderung, des Datenstroms bei einer von einer Mehrzahl von Bitraten auszuführen.

46. In einer Informationsverarbeitungsvorrichtung (30, 32, 34), welche über ein lokales Netzwerk (5) an eine Mehrzahl von Datenstromerfassungsvorrichtungen (10, 11, 14) und an eine oder mehrere Speichervorrichtungen (20, 21, 24) anschließbar ist, ein Verfahren zum Steuern dieser Mehrzahl von Datenstromerfassungsvorrichtungen (10, 11, 14) und der einen oder mehreren Speichervorrichtungen, wobei das Verfahren die Schritte umfasst:
Empfangen, von jeder Datenstromerfassungsvorrichtung (10, 11, 14) und Speichervorrichtung (20, 21, 24), wenn sich die Datenstromerfassungsvorrichtung oder die Speichervorrichtung zuerst mit dem lokalen Netzwerk verbindet, eines Ankündigungspakets, welches Vorrichtungsinformation in Bezug auf Funktionen dieser Datenstromerfassungsvorrichtung oder Speichervorrichtung umfasst;
Übertragen, in Antwort auf eine Benutzeranfrage, eines Suchbefehls an die Mehrzahl von Datenstromerfassungsvorrichtungen (10, 11, 14) und die eine oder mehreren Speichervorrichtungen (20, 21, 24), und dann Erheben der Vorrichtungsinformation in Bezug auf Funktionen der Erfassungsvorrichtungen und der Speichervorrichtungen aus empfangenen Antworten;
Auffordern, in Antwort auf die Antworten, einer der Mehrzahl von Erfassungsvorrichtungen (10, 11, 14), auf einen gewünschten Kanal abgestimmt zu werden und einen gewünschten Datenstrom zu empfangen, wenn bestimmt wird, dass die eine Erfassungsvorrichtung auf den Kanal abstimmbar ist; und
Auffordern, in Antwort auf die Antworten, einer der einen oder mehreren Speichervorrichtungen (20, 21, 24), den Datenstrom von der einen Erfassungsvorrichtung aufzuzeichnen, wenn bestimmt wird, dass die eine Speichervorrichtung den Datenstrom aufzeichnen kann.

47. Ein Verfahren nach Anspruch 46, des Weiteren umfassend den Schritt des Veranlassens, wenn die eine Erfassungsvorrichtung (10, 11, 14) auf einen anderen Kanal abgestimmt werden soll, einer anderen der Mehrzahl von Erfassungsvorrichtungen, die auf diesen anderen Kanal abzustimmen ist, anstelle der einen Erfassungsvorrichtung, und dann Bereitstellen dieser Aufforderung an die eine Erfassungsvorrichtung.

48. Ein Verfahren nach Anspruch 46 oder 47, des Weiteren umfassend den Schritt des Aufforderns einer anderen der einen oder mehreren Speichervorrichtungen (20, 21, 24), einen nachfolgenden Anteil des Datenstrom aufzuzeichnen, wenn eine Menge, welche in der einen Speichervorrichtung gespeichert ist, ein Limit erreicht, während die eine Speichervorrichtung den Datenstrom aufzeichnet.

49. In einer Informationsverarbeitungsvorrichtung (30, 32, 34), welche über ein lokales Netzwerk (5) an eine Mehrzahl von Datenstromerfassungsvorrichtungen (10, 11, 14) und an eine oder mehrere Speichervorrichtungen (20, 21, 24) anschließbar ist, ein Verfahren zum Steuern dieser Mehrzahl von Datenstromerfassungsvorrichtungen und der einen oder mehreren Speichervorrichtungen, wobei das Verfahren die Schritte umfasst:
Empfangen, von jeder Datenstromerfassungsvorrichtung (10, 11, 14) und Speichervorrichtung (20, 21, 24), wenn sich die Datenstromerfassungsvorrichtung oder die Speichervorrichtung zuerst mit dem lokalen Netzwerk verbindet, eines Ankündigungspakets, welches Vorrichtungsinformation in Bezug auf Funktionen dieser Datenstromerfassungsvorrichtung oder Speichervorrichtung umfasst;
Übertragen, in Antwort auf eine Benutzeranfrage, eines Suchbefehls an die Mehrzahl von Datenstromerfassungsvorrichtungen (10, 11, 14) und die eine oder mehreren Speichervorrichtungen (20, 21, 24), und dann Erheben der Vorrichtungsinformation in Bezug auf Funktionen der Erfassungsvorrichtungen und der Speichervorrichtungen aus empfangenen Antworten;
in Antwort auf die Antworten, Auffordern einer der Mehrzahl von Erfassungsvorrichtungen (10, 11, 14), auf einen gewünschten Kanal abgestimmt zu werden, auf welchem ein Datenstrom, der von einem Benutzer gewünscht ist, empfangen werden kann, und um den gewünschten Datenstrom zu empfangen und bereitzustellen, wenn der gewünschte Datenstrom momentan gesendet wird und wenn bestimmt wird, dass die eine Erfassungsvorrichtung auf den Kanal abstimmbar ist; und
in Antwort auf die Antworten, Auffordern einer der einen oder mehreren Speichervorrichtungen (20, 21, 24), welche den Datenstrom, der von einem Benutzer gewünscht ist, speichert, um den gewünschten Datenstrom bereitzustellen, wenn bestimmt wird, dass der gewünschte Datenstrom in der Vergangenheit gesendet wurde.

50. In einer Datenstromerfassungsvorrichtung (10, 11, 14), welche über ein lokales Netzwerk (5) an eine oder mehrere Speichervorrichtungen (20, 21, 24) und an eine Mehrzahl von Benutzervorrichtungen (30, 32, 34) anschließbar ist, ein Verfahren zum Erfassen und Übertragen eines Datenstroms, wobei das Verfahren die Schritte umfasst:
Senden an diese Benutzervorrichtungen (30, 32, 34), wenn sich die Datenstromerfassungsvorrichtung (10, 11, 14) zuerst mit dem lokalen Netzwerk verbindet, eines Ankündigungspakets, welches Vorrichtungsinformation in Bezug auf Funktionen der Datenstromerfassungsvorrichtung umfasst;
Empfangen eines suchbefehls von einer solchen Benutzervorrichtung (30, 32, 34) und dann Übertragen einer Antwort, welche die Vorrichtungsinformation in Bezug auf Funktionen der Datenstromerfassungsvorrichtung enthält;
Veranlassen, in Übereinstimmung mit einer empfangenen Aufforderung, einer Abstimmungsvorrichtung (120) der Datenstromerfassungsvorrichtung, um auf einen gewünschten Kanal abgestimmt zu werden und um einen gewünschten Datenstrom zu empfangen, wenn bestimmt wird, dass diese Abstimmungsvorrichtung auf diesen Kanal abstimmbar ist;
Übertragen, in Antwort auf eine empfangene Aufforderung, des Datenstroms in einem vorbestimmten Format an die Benutzervorrichtung (30, 32, 34); und
Übertragen des Datenstroms an eine solche Speichervorrichtung (20, 21, 24), in Antwort auf eine empfangene Aufforderung.

51. Ein Verfahren nach Anspruch 50, des Weiteren umfassend den Schritt des Konvertierens empfangener Programmführungsdaten in ein spezielles Format in Programmführungsdaten in einem vorbestimmten Format, und Übertragen der konvertierten Programmführungsdaten an die Benutzervorrichtung (30, 32, 34).

52. Ein Verfahren nach Anspruch 50 oder 51, des Weiteren umfassend den Schritt des Übertragens des Datenstroms bei einer von einer Mehrzahl von Bitraten, in Antwort auf eine empfangene Aufforderung.

53. Ein Verfahren nach einem der Ansprüche 50, 51 oder 52, des Weiteren umfassend den Schritt des Übertragens, in Übereinstimmung mit einer empfangenen Aufforderung, eines Beschreibungsdecodierungsschlüssels, welcher zum Reproduzieren des Datenstroms notwendig ist, an die Benutzervorrichtung (30, 32, 34), während ein Beschreibungsdecodierungsschlüssel in der Regel nicht übertragen wird.

54. In einer Speichervorrichtung (20, 21, 24), welche über ein lokales Netzwerk (5) an eine Mehrzahl von Datenstromerfassungsvorrichtungen (10, 11, 14) und an eine Mehrzahl von Benutzervorrichtungen (30, 32, 34) anschließbar ist, ein Verfahren zum Aufzeichnen und Bereitstellen eines Datenstroms, wobei das Verfahren die Schritte umfasst:
Senden an die Benutzervorrichtungen (30, 32, 34), wenn sich die Speichervorrichtung (20, 21, 24) zuerst mit dem lokalen Netzwerk verbindet, eines Ankündigungspakets, welches vorrichtungsinformation in Bezug auf Funktionen der Speichervorrichtung umfasst;
Empfangen eines Suchbefehls von einer Benutzervorrichtung (30, 32, 34) und dann Übertragen einer Antwort, welche die Vorrichtungsinformation in Bezug auf Funktionen der Speichervorrichtung enthält;
Aufzeichnen, in Antwort auf eine empfangene Aufforderung, eines gewünschten Datenstroms von einer solchen Erfassungsvorrichtung (10, 11, 14) auf ein Aufzeichnungsmedium (220), wenn bestimmt wird, dass ein Datenstrom auf dem Aufzeichnungsmedium aufgezeichnet werden kann; und
Bereitstellen, in Antwort auf eine empfangene Aufforderung, eines Datenstroms, der auf dem Aufzeichnungsmedium (220) aufgezeichnet ist, in einem vorbestimmten Format, an eine der Mehrzahl von Benutzervorrichtungen (30, 32, 34).

55. Ein Verfahren nach Anspruch 54, des Weiteren umfassend die Schritte:
Annehmen einer neuen Aufforderung zum Aufzeichnen, sofern nicht die Anzahl von Datenströmen, welche gleichzeitig aufzeichnet werden können, einen Schwellenwert überschreitet; und
gleichzeitiges Aufzeichnen einer Mehrzahl von Datenströmen auf dem Aufzeichnungsmedium (220), in Übereinstimmung mit einer Mehrzahl empfangener Aufforderungen.

56. Ein Verfahren nach Anspruch 54 oder 55, des Weiteren umfassend den Schritt des Aufforderns einer weiteren Speichervorrichtung, einen nachfolgenden Anteil des Datenstroms aufzuzeichnen, über das lokale Netzwerk (5), wenn bestimmt wird, dass eine Menge, welche in der ersten Speichervorrichtung (20, 21, 24) gespeichert ist, während dem Aufzeichnen des Datenstroms ein Limit erreicht.

57. Ein. Verfahren nach Anspruch 54, 55 oder 56, des Weiteren umfassend den Schritt des Empfangens einer Aufforderung für eine Aufzeichnungsreservierung in Übereinstimmung mit der empfangenen Aufforderung.

## Revendications

1. Dispositif de commande (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), où
ledit dispositif de commande comprend un processeur (310),
ledit processeur (310) est conçu pour recevoir, de chaque dit dispositif d'acquisition de flux de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif dudit dispositif d'acquisition de flux de données ou dudit dispositif de mémorisation,
ledit processeur (310) est conçu pour transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et pour recueillir les informations de dispositifs concernant des fonctions des dispositifs d'acquisition et des dispositifs de mémorisation à partir des réponses reçues,
ledit processeur (310) est conçu pour demander, en réponse auxdites réponses, à un dispositif de ladite pluralité de dispositifs d'acquisition (10, 11, 14) de s'accorder sur un canal souhaité et pour recevoir un flux de données souhaité, lorsqu'il est déterminé que ledit un dispositif d'acquisition peut s'accorder sur ledit canal, et
ledit processeur (310) est conçu pour demander, en réponse auxdites réponses, à un dispositif parmi lesdits un ou plusieurs dispositifs de mémorisation (20, 21, 24) d'enregistrer le flux de données provenant dudit un dispositif d'acquisition (10, 11, 14), lorsqu'il est déterminé que ledit un dispositif de mémorisation peut enregistrer le flux de données.

2. Dispositif de commande (30, 32, 34) selon la revendication 1, dans lequel, lorsque ledit un dispositif d'acquisition (10, 11, 14) doit être accordé sur un autre canal, ledit processeur (310) amène un autre dispositif de ladite pluralité de dispositifs d'acquisition à être accordé sur ledit autre canal à la place dudit un dispositif d'acquisition, et fournit ensuite ladite demande audit un dispositif d'acquisition.

3. Dispositif de commande (30, 32, 34) selon la revendication 1 ou 2, dans lequel lorsqu'une quantité mémorisée dans ledit un dispositif de mémorisation (20, 21, 24) atteint une limite alors que ledit un dispositif de mémorisation est en train d'enregistrer le flux de données, ledit processeur (310) demande à un autre dispositif parmi lesdits un ou plusieurs dispositifs de mémorisation d'enregistrer une partie suivante du flux de données.

4. Dispositif de commande (30, 32, 34) selon la revendication 1, 2 ou 3, dans lequel le flux de données est un flux de données d'un programme qui est planifié pour être diffusé dans le futur.

5. Dispositif de commande (30, 32, 34) selon l'une quelconque des revendications 1 à 4, dans lequel ledit processeur reçoit des données de guide de programme suivant un format prédéterminé provenant d'un dispositif parmi ladite pluralité de dispositifs d'acquisition (10, 11, 14).

6. Dispositif de commande (30, 32, 34) selon l'une quelconque des revendications 1 à 5, dans lequel ledit processeur demande audit un dispositif d'acquisition (10, 11, 14) de transmettre une clé de décryptage qui est nécessaire pour la reproduction du flux de données.

7. Dispositif de commande (30, 32, 34) selon l'une quelconque des revendications 1 à 6, dans lequel ledit processeur (310) demande audit un dispositif d'acquisition (10, 11, 14) de modifier un débit binaire d'un flux de données devant être transmis.

8. Dispositif de commande (30, 32, 34) selon l'une quelconque des revendications 1 à 7, dans lequel ledit processeur (310) demande audit un dispositif de mémorisation (20, 21, 24) de modifier un débit binaire d'un flux de données devant être transmis.

9. Dispositif de commande (30, 32, 34) selon l'une quelconque des revendications 1 à 8, dans lequel ledit processeur (310) reçoit et reproduit le flux de données et fournit le flux de données reproduit à un dispositif d'affichage (306, 326, 346).

10. Dispositif de commande (30, 32, 34) selon l'une quelconque des revendications 1 à 9, dans lequel un dispositif de reproduction (548) qui peut être connecté audit réseau local (5) est associé audit dispositif de commande.

11. Dispositif de commande (30, 32, 34) selon l'une quelconque des revendications 1 à 10, dans lequel la demande d'utilisateur est reçue par le biais dudit réseau local (5).

12. Dispositif de commande (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), où ledit dispositif de commande comprend un processeur (310),
ledit processeur (310) est conçu pour recevoir, de chaque dit dispositif d'acquisition de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif dudit dispositif d'acquisition de flux de données ou dudit dispositif de mémorisation,
ledit processeur (310) est conçu pour transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et pour recueillir des informations de dispositifs concernant des fonctions des dispositifs d'acquisition et des dispositifs de mémorisation à partir des réponses reçues,
ledit processeur (310) est conçu pour demander, en réponse auxdites réponses, à un dispositif parmi ladite pluralité de dispositifs d'acquisition (10, 11, 14) d'être accordé sur un canal sur lequel un flux de données souhaité par un utilisateur peut être reçu et pour recevoir et fournir ledit flux de données souhaité, lorsque ledit flux de données souhaité est actuellement diffusé, et lorsqu'il est déterminé que ledit un dispositif d'acquisition peut être accordé sur ledit canal, et
ledit processeur (310) est conçu pour demander, en réponse auxdites réponses, à l'un desdits un ou plusieurs dispositifs de mémorisation (20, 21, 24) qui mémorise ledit flux de données souhaité par l'utilisateur de fournir ledit flux de données souhaité, lorsqu'il est déterminé que ledit flux de données souhaité a été diffusé par le passé.

13. Dispositif d'acquisition de flux de données (10, 11, 14) qui peut être connecté à un ou plusieurs dispositifs de mémorisation (20, 21, 24) et à une pluralité de dispositifs d'utilisateurs (30, 32, 34) par le biais d'un réseau local (5), où
ledit dispositif d'acquisition de flux de données (10, 11, 14) comprend un processeur (110) et un syntoniseur (120),
ledit processeur (110) est conçu pour diffuser auxdits dispositifs d'utilisateurs, lorsque ledit dispositif d'acquisition de flux de données (10, 11, 14) est connecté pour la première fois au réseau local, un paquet d'annonce comprenant des informations de dispositif concernant des fonctions dudit dispositif d'acquisition de flux de données,
ledit processeur (110) est conçu pour recevoir une instruction de recherche d'un dit dispositif d'utilisateur (30, 32, 34) et pour transmettre ensuite une réponse contenant les informations de dispositif concernant des fonctions dudit dispositif d'acquisition de flux de données,
ledit processeur (110) est conçu pour amener, conformément à une demande reçue, ledit syntoniseur (120) à s'accorder sur un canal souhaité et pour recevoir un flux de données souhaité, lorsqu'il est déterminé que ledit syntoniseur peut être accordé sur ledit canal,
ledit processeur (110) est conçu pour transmettre, en réponse à une demande reçue, ledit flux de données suivant un format prédéterminé audit dispositif d'utilisateur (30, 32, 34), et
ledit processeur (110) est conçu pour transmettre ledit flux de données audit ou à un dit dispositif de mémorisation (20, 21, 24) en réponse à une demande reçue.

14. Dispositif d'acquisition (10, 11, 14) selon la revendication 13, dans lequel ledit processeur (110) convertit des données de guide de programme reçues suivant un format particulier en données de guide de programme suivant un format prédéterminé, et transmet les données de guide de programme converties audit dispositif d'utilisateur.

15. Dispositif d'acquisition (10, 11, 14) selon la revendication 13 ou 14, dans lequel, lorsque ledit syntoniseur (120) n'a pas à être accordé, des éléments autres qu'un élément nécessaire pour recevoir une instruction depuis ledit réseau local ne sont plus alimentés.

16. Dispositif d'acquisition (10, 11, 14) selon l'une quelconque des revendications 13, 14 ou 15, dans lequel ledit dispositif d'acquisition reçoit une réservation d'accord conformément à la demande reçue.

17. Dispositif d'acquisition (10, 11, 14) selon l'une quelconque des revendications 13 à 16, dans lequel ledit processeur (110) transmet le flux de données à un débit parmi une pluralité de débits binaires, en réponse à la demande reçue.

18. Dispositif d'acquisition (10, 11, 14) selon l'une quelconque des revendications 13 à 17, dans lequel ledit processeur (110) transmet, conformément à une demande reçue, une clé de décryptage de description qui est nécessaire pour reproduire le flux de données audit dispositif d'utilisateur (30, 32, 34), alors qu'une clé de décryptage de description n'est normalement pas transmise.

19. Dispositif de mémorisation (20, 21, 24) qui peut être connecté à une pluralité de dispositifs d'acquisition de flux de données (10, 11, 14) et à une pluralité de dispositifs d'utilisateurs (30, 32, 34) par le biais d'un réseau local (5), dans lequel
ledit dispositif de mémorisation comprend un processeur (210) et un support d'enregistrement (220),
ledit processeur (210) est conçu pour diffuser auxdits dispositifs d'utilisateurs (30, 32, 34), lorsque ledit dispositif de mémorisation (20, 21, 24) est connecté pour la première fois au réseau local, un paquet d'annonce comprenant des informations de dispositif concernant des fonctions dudit dispositif de mémorisation,
ledit processeur (210) est conçu pour recevoir une instruction de recherche d'un dit dispositif d'utilisateur (30, 32, 34) et ensuite pour transmettre une réponse contenant les informations de dispositif concernant des fonctions dudit dispositif de mémorisation,
ledit processeur (210) est conçu pour enregistrer, en réponse à une demande reçue, un flux de données souhaité provenant d'un dit dispositif d'acquisition (10, 11, 14) sur un dit support d'enregistrement (220), lorsqu'il est déterminé qu'un flux de données peut être enregistré sur ledit support d'enregistrement (220), et
ledit processeur (210) est conçu pour fournir, en réponse à une demande reçue, un flux de données enregistré sur ledit support d'enregistrement (220), suivant un format prédéterminé, à un dispositif parmi ladite pluralité de dispositifs d'utilisateurs (30, 32, 34).

20. Dispositif de mémorisation (20, 21, 24) selon la revendication 19, dans lequel ledit dispositif de mémorisation enregistre simultanément une pluralité de flux de données sur ledit support d'enregistrement (220), conformément à une pluralité de demandes reçues, et
ledit processeur (210) accepte une nouvelle demande d'enregistrement, à moins que le nombre de flux de données qui peuvent être simultanément enregistrés ne dépasse un seuil.

21. Dispositif de mémorisation (20, 21, 24) selon la revendication 19 ou 20, dans lequel, lorsqu'il est déterminé qu'une quantité mémorisée dans ledit dispositif de mémorisation atteint une limite au cours de l'enregistrement du flux de données, ledit processeur demande à un autre dispositif de mémorisation d'enregistrer une partie suivante du flux de données, par le biais dudit réseau local (5).

22. Dispositif de mémorisation (20, 21, 24) selon l'une quelconque des revendications 19, 20 ou 21, dans lequel ledit processeur (210) efface un flux parmi les flux de données enregistrés sur ledit support d'enregistrement (220) qui a une priorité inférieure.

23. Dispositif de mémorisation (20, 21, 24) selon l'une quelconque des revendications 19 à 22, dans lequel ledit processeur (210) efface les anciens flux parmi les flux de données enregistrés sur ledit support d'enregistrement (220).

24. Dispositif de mémorisation (20, 21, 24) selon l'une quelconque des revendications 19 à 23, dans lequel ledit dispositif de mémorisation reçoit une demande de réservation d'enregistrement conformément à la demande reçue.

25. Dispositif de mémorisation (20, 21, 24) selon l'une quelconque des revendications 19 à 24, dans lequel ledit processeur (210) transmet le flux de données à un débit parmi une pluralité de débits binaires, en réponse à la demande reçue.

26. Système destiné à acquérir, mémoriser et délivrer un flux de données, comprenant une pluralité de dispositifs d'acquisition de flux de données (10, 11, 14), un ou plusieurs dispositifs de mémorisation (20, 21, 24) et une pluralité de dispositifs d'utilisateurs (30, 32, 34), lesdits dispositifs pouvant être connectés les uns aux autres par le biais d'un réseau local (5), dans lequel
chaque dit dispositif d'acquisition de flux de données (10, 11, 14) et chaque dit dispositif de mémorisation (20, 21, 24) diffusent auxdits dispositifs d'utilisateurs (30, 32, 34), lorsqu'ils se connectent la première fois au réseau local, un paquet d'annonce comprenant des informations de dispositif concernant des fonctions dudit dispositif d'acquisition de flux de données ou dudit dispositif de mémorisation,
un dit dispositif d'utilisateur (30, 32, 34) transmet, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et recueille ensuite les informations de dispositifs concernant des fonctions des dispositifs d'acquisition et des dispositifs de mémorisation à partir des réponses reçues,
ledit dispositif d'utilisateur (30, 32, 34) transmet, en réponse auxdites réponses, une demande à un dit dispositif d'acquisition (10, 11, 14) conformément à la demande de l'utilisateur,
ledit dispositif d'utilisateur (30, 32, 34) transmet, en réponse auxdites réponses, une demande à un dit dispositif de mémorisation (20, 21, 24) conformément à la demande de l'utilisateur,
lorsqu'il est déterminé qu'un dispositif parmi ladite pluralité de dispositifs d'acquisition (10, 11, 14) peut s'accorder sur un canal pour un programme de diffusion souhaité, conformément à une demande provenant d'un dispositif parmi ladite pluralité de dispositifs d'utilisateurs (30, 32, 34), ledit un dispositif d'acquisition s'accorde sur le canal, et reçoit et fournit un flux de données du programme,
conformément à une demande provenant d'un dispositif parmi ladite pluralité de dispositifs d'utilisateurs (30, 32, 34), un dispositif parmi lesdits un ou plusieurs dispositifs de mémorisation (20, 21, 24) enregistre le flux de données du programme souhaité provenant dudit un dispositif d'acquisition (10, 11, 14) qui est accordé sur le canal, et
conformément à une demande provenant d'un dispositif parmi ladite pluralité de dispositifs d'utilisateurs (30, 32, 34), un dispositif parmi lesdits un ou plusieurs dispositifs de mémorisation (20, 21, 24) transmet un flux de données enregistré souhaité.

27. Programme mémorisé sur un support de mémorisation pour un dispositif de traitement d'informations (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), ledit programme pouvant être mis en oeuvre pour réaliser les étapes consistant à :
recevoir, de chaque dit dispositif d'acquisition de flux de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif concernant des fonctions dudit dispositif d'acquisition de flux de données ou dudit dispositif de mémorisation,
transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et ensuite recueillir les informations de dispositifs concernant des fonctions des dispositifs d'acquisition et des dispositifs de mémorisation à partir des réponses reçues,
demander, en réponse auxdites réponses, à un dispositif parmi ladite pluralité de dispositifs d'acquisition (10, 11, 14) de s'accorder sur un canal souhaité et de recevoir un flux de données souhaité, lorsqu'il est déterminé que ledit un dispositif d'acquisition peut s'accorder sur ledit canal, et
demander, en réponse auxdites réponses, à un dispositif parmi lesdits un ou plusieurs dispositifs de mémorisation (20, 21, 24) d'enregistrer le flux de données provenant dudit un dispositif d'acquisition, lorsqu'il est déterminé que ledit un dispositif de mémorisation peut enregistrer le flux de données.

28. Programme selon la revendication 27, qui peut être mis en oeuvre pour en outre réaliser l'étape consistant à amener, lorsque ledit un dispositif d'acquisition (10, 11, 14) doit être accordé sur un autre canal, un autre dispositif parmi ladite pluralité de dispositifs d'acquisition à être accordé sur l'autre canal à la place dudit un dispositif d'acquisition, et ensuite à fournir ladite demande audit un dispositif d'acquisition.

29. Programme selon la revendication 27 ou 28, pouvant être mis en oeuvre en outre pour réaliser l'étape consistant à demander à un autre dispositif parmi lesdits un ou plusieurs dispositifs de mémorisation (20, 21, 24) d'enregistrer une partie suivante du flux de données, lorsqu'une quantité mémorisée dans ledit un dispositif de mémorisation atteint une limite alors que ledit un dispositif de mémorisation est en train d'enregistrer le flux de données.

30. Programme selon l'une quelconque des revendications 27, 28 ou 29, pouvant être mis en oeuvre pour en outre réaliser l'étape consistant à recevoir des données de guide de programme suivant un format prédéterminé à partir d'un dispositif parmi ladite pluralité de dispositifs d'acquisition (10, 11, 14).

31. Programme selon l'une quelconque des revendications 27 à 30, pouvant être mis en oeuvre pour en outre réaliser l'étape consistant à demander audit un dispositif d'acquisition (10, 11, 14) de transmettre une clé de décryptage de description qui est nécessaire pour reproduire le flux de données.

32. Programme selon l'une quelconque des revendications 27 à 31, pouvant être mis en oeuvre pour en outre réaliser l'étape consistant à demander audit un dispositif d'acquisition (10, 11, 14) de modifier un débit binaire d'un flux de données devant être transmis.

33. Programme selon l'une quelconque des revendications 27 à 32, pouvant être mis en oeuvre pour en outre réaliser l'étape consistant à demander audit un dispositif de mémorisation (20, 21, 24) de modifier un débit binaire d'un flux de données devant être transmis.

34. Programme selon l'une quelconque des revendications 27 à 33, pouvant être mis en oeuvre pour en outre réaliser l'étape consistant à recevoir et à reproduire le flux de données, et à fournir le flux de données reproduit à un dispositif d'affichage.

35. Programme mémorisé sur un support de mémorisation pour un dispositif de commande (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), ledit programme pouvant en outre être mis en oeuvre pour réaliser les étapes consistant à :
recevoir, de chaque dit dispositif d'acquisition de flux de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif concernant des fonctions dudit dispositif d'acquisition de flux de données ou dudit dispositif de mémorisation,
transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et ensuite recueillir les informations de dispositifs concernant des fonctions des dispositifs d'acquisition et des dispositifs de mémorisation à partir des réponses reçues,
demander, en réponse auxdites réponses, à un dispositif parmi ladite pluralité de dispositifs d'acquisition (10, 11, 14) d'être accordé sur un canal sur lequel un flux de données souhaité par un utilisateur peut être reçu et de recevoir et de fournir ledit flux de données souhaité, lorsque ledit flux de données souhaité est actuellement diffusé, et lorsqu'il est déterminé que ledit un dispositif d'acquisition peut s'accorder sur ledit canal, et
demander, en réponse auxdites réponses, à un dispositif parmi lesdits un ou plusieurs dispositifs de mémorisation (20, 21, 24) qui mémorise ledit flux de données souhaité par l'utilisateur de fournir ledit flux de données souhaité, lorsqu'il est déterminé que ledit flux de données souhaité a été diffusé par le passé.

36. Programme mémorisé sur un support de mémorisation pour un dispositif d'acquisition de flux de données (10, 11, 14) qui peut être connecté à un ou plusieurs dispositifs de mémorisation (20, 21, 24) et à une pluralité de dispositifs d'utilisateurs (30, 32, 34) par le biais d'un réseau local (5), ledit programme pouvant être mis en oeuvre pour réaliser les étapes consistant à :
diffuser auxdits dispositifs d'utilisateurs (30, 32, 34), lorsque ledit dispositif d'acquisition de flux de données (10, 11, 14) se connecte la première fois au réseau local, un paquet d'annonce comprenant des informations de dispositif concernant des fonctions dudit dispositif d'acquisition de flux de données,
recevoir une instruction de recherche d'un dit dispositif d'utilisateur et transmettre ensuite une réponse contenant les informations de dispositif concernant des fonctions dudit dispositif d'acquisition de flux de données,
amener, conformément à une demande reçue, un syntoniseur (120) dudit dispositif d'acquisition de flux de données (10, 11, 14) à être accordé sur un canal souhaité et à recevoir un flux de données souhaité, lorsqu'il est déterminé que ledit syntoniseur peut s'accorder sur ledit canal,
transmettre, en réponse à une demande reçue, ledit flux de données suivant un format prédéterminé audit dispositif d'utilisateur (30, 32, 34), et
transmettre ledit flux de données à un dit dispositif de mémorisation (20, 21, 24) en réponse à une demande reçue.

37. Programme selon la revendication 36, pouvant être mis en oeuvre pour en outre réaliser l'étape consistant à convertir des données de guide de programme reçues suivant un format prédéterminé en données de guide de programme suivant un format prédéterminé, et à transmettre les données de guide de programme converties audit dispositif d'utilisateur (30, 32, 34).

38. Programme selon la revendication 36 ou 37, pouvant être mis en oeuvre pour en outre réaliser l'étape consistant à recevoir une réservation d'accord conformément à la demande reçue.

39. Programme selon l'une quelconque des revendications 36, 37 ou 38, pouvant être mis en oeuvre pour en outre réaliser l'étape consistant à transmettre le flux de données à un débit parmi une pluralité de débits binaires, en réponse à la demande reçue.

40. Programme selon l'une quelconque des revendications 36 à 39, pouvant être mis en oeuvre pour en outre réaliser l'étape consistant à transmettre, conformément à une demande reçue, une clé de décryptage de description qui est nécessaire pour reproduire le flux de données audit dispositif d'utilisateur (30, 32, 34) alors qu'une clé de décryptage de description n'est normalement pas transmise.

41. Programme mémorisé sur un support de mémorisation pour un dispositif de mémorisation (20, 21, 24) qui peut être connecté à une pluralité de dispositifs d'acquisition de flux de données (10, 11, 14) et à une pluralité de dispositifs d'utilisateurs (30, 32, 34) par le biais d'un réseau local (5), ledit programme pouvant être mis en oeuvre pour réaliser les étapes consistant à :
diffuser auxdits dispositifs d'utilisateurs (30, 32, 34), lorsque ledit dispositif de mémorisation (20, 21, 24) se connecte la première fois au réseau local, un paquet d'annonce comprenant des informations de dispositif concernant des fonctions dudit dispositif de mémorisation,
recevoir une instruction de recherche d'un dit dispositif d'utilisateur (30, 32, 34) et transmettre ensuite une réponse concernant les informations de dispositif concernant des fonctions dudit dispositif de mémorisation,
enregistrer, en réponse à une demande reçue, un flux de données souhaité provenant d'un dit dispositif d'acquisition (10, 11, 14) sur un support d'enregistrement (220), lorsqu'il est déterminé qu'un flux de données peut être enregistré sur ledit support d'enregistrement, et
fournir, en réponse à une demande reçue, un flux de données enregistré sur ledit support d'enregistrement (220) suivant un format prédéterminé, à un dispositif parmi ladite pluralité de dispositifs d'utilisateurs (30, 32, 34).

42. Programme selon la revendication 41, pouvant être mis en oeuvre pour en outre réaliser les étapes consistant à :
accepter une nouvelle demande d'enregistrement, à moins que le nombre de flux de données qui peuvent être simultanément enregistrés ne dépasse un seuil, et
enregistrer simultanément une pluralité de flux de données sur ledit support d'enregistrement (220), conformément à une pluralité de demandes reçues.

43. Programme selon la revendication 41 ou 42, pouvant être mis en oeuvre pour en outre réaliser l'étape consistant à demander à un autre dispositif de mémorisation (20, 21, 24) d'enregistrer une partie suivante du flux de données, par le biais dudit réseau local (5), lorsqu'il est déterminé qu'une quantité mémorisée dans ledit premier dispositif de mémorisation atteint une limite au cours de l'enregistrement du flux de données.

44. Programme selon l'une quelconque des revendications 41, 42 ou 43, pouvant être mis en oeuvre pour en outre réaliser l'étape consistant à recevoir une demande de réservation d'enregistrement conformément à la demande reçue.

45. Programme selon l'une quelconque des revendications 41 à 44, pouvant être mis en oeuvre pour en outre réaliser l'étape consistant à transmettre, en réponse à la demande reçue, le flux de données à un débit parmi une pluralité de débits binaires.

46. Dans un dispositif de traitement d'informations (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), procédé destiné à commander ladite pluralité de dispositifs d'acquisition de flux de données (10, 11, 14) et lesdits un ou plusieurs dispositifs de mémorisation, ledit procédé comprenant les étapes consistant à :
recevoir, de chaque dit dispositif d'acquisition de flux de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif concernant des fonctions dudit dispositif d'acquisition de flux de données ou dudit dispositif de mémorisation,
transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et ensuite recueillir les informations de dispositifs concernant des fonctions des dispositifs d'acquisition et des dispositifs de mémorisation à partir des réponses reçues,
demander, en réponse auxdites réponses, à un dispositif parmi ladite pluralité de dispositifs d'acquisition (10, 11, 14) d'être accordé sur un canal souhaité et de recevoir un flux de données souhaité, lorsqu'il est déterminé que ledit un dispositif d'acquisition peut s'accorder sur ledit canal, et
demander, en réponse auxdites réponses, à un dispositif parmi lesdits un ou plusieurs dispositifs de mémorisation (20, 21, 24) d'enregistrer le flux de données provenant dudit un dispositif d'acquisition, lorsqu'il est déterminé que ledit un dispositif de mémorisation peut enregistrer le flux de données.

47. Procédé selon la revendication 46, comprenant en outre l'étape consistant à amener, lorsque ledit un dispositif d'acquisition (10, 11, 14) doit être accordé sur un autre canal, un autre dispositif parmi ladite pluralité de dispositifs d'acquisition à être accordé sur ledit autre canal à la place dudit un dispositif d'acquisition, et à fournir ensuite ladite demande audit un dispositif d'acquisition.

48. Procédé selon la revendication 46 ou 47, comprenant en outre l'étape consistant à demander à un autre dispositif parmi lesdits un ou plusieurs dispositifs de mémorisation (20, 21, 24) d'enregistrer une partie suivante du flux de données, lorsqu'une quantité mémorisée dans ledit un dispositif de mémorisation atteint une limite alors que ledit un dispositif de mémorisation est en train d'enregistrer le flux de données.

49. Dans un dispositif de traitement d'informations (30, 32, 34) qui peut être connecté à une pluralité de dispositifs d'acquisition de flux de données (10, 11, 14) et à un ou plusieurs dispositifs de mémorisation (20, 21, 24) par le biais d'un réseau local (5), procédé destiné à commander ladite pluralité de dispositifs d'acquisition de flux de données et lesdits un ou plusieurs dispositifs de mémorisation, ledit procédé comprenant les étapes consistant à :
recevoir, de chaque dit dispositif d'acquisition de flux de données (10, 11, 14) et de chaque dit dispositif de mémorisation (20, 21, 24), lorsque ledit dispositif d'acquisition de flux de données ou ledit dispositif de mémorisation se connecte la première fois au réseau local, un paquet d'annonce comprenant des informations de dispositif concernant des fonctions dudit dispositif d'acquisition de flux de données ou dudit dispositif de mémorisation,
transmettre, en réponse à une demande d'utilisateur, une instruction de recherche à ladite pluralité de dispositifs d'acquisition de flux de données (10, 11, 14) et auxdits un ou plusieurs dispositifs de mémorisation (20, 21, 24) et recueillir ensuite les informations de dispositifs concernant des fonctions des dispositifs d'acquisition et des dispositifs de mémorisation à partir des réponses reçues,
en réponse auxdites réponses, demander à un dispositif d'acquisition parmi ladite pluralité de dispositifs d'acquisition (10, 11, 14) d'être accordé sur un canal sur lequel un flux de données souhaité par un utilisateur peut être reçu et de recevoir et de fournir ledit flux de données souhaité, lorsque ledit flux de données souhaité est actuellement diffusé, et lorsqu'il est déterminé que ledit un dispositif d'acquisition peut s'accorder sur ledit canal, et
en réponse auxdites réponses, demander à un dispositif parmi lesdits un ou plusieurs dispositifs de mémorisation (20, 21, 24) qui mémorise ledit flux de données souhaité par l'utilisateur de fournir ledit flux de données souhaité, lorsqu'il est déterminé que ledit flux de données souhaité a été diffusé par le passé.

50. Dans un dispositif d'acquisition de flux de données (10, 11, 14) qui peut être connecté à un ou plusieurs dispositifs de mémorisation (20, 21, 24) et à une pluralité de dispositifs d'utilisateurs (30, 32, 34) par le biais d'un réseau local (5), procédé d'acquisition et de transmission d'un flux de données, ledit procédé comprenant les étapes consistant à :
diffuser auxdits dispositifs d'utilisateurs (30, 32, 34), lorsque ledit dispositif d'acquisition de flux de données (10, 11, 14) se connecte la première fois au réseau local, un paquet d'annonce comprenant des informations de dispositif concernant des fonctions dudit dispositif d'acquisition de flux de données,
recevoir une instruction de recherche d'un dit dispositif d'utilisateur (30, 32, 34) et transmettre ensuite une réponse contenant les informations de dispositif concernant des fonctions dudit dispositif d'acquisition de flux de données,
amener, conformément à une demande reçue, un syntoniseur (120) dudit dispositif d'acquisition de flux de données à être accordé sur un canal souhaité et à recevoir un flux de données souhaité, lorsqu'il est déterminé que ledit syntoniseur peut s'accorder sur ledit canal,
transmettre, en réponse à une demande reçue, ledit flux de données suivant un format prédéterminé audit dispositif d'utilisateur (30, 32, 34), et
transmettre ledit flux de données à un dit dispositif de mémorisation (20, 21, 24) en réponse à une demande reçue.

51. Procédé selon la revendication 50, comprenant en outre l'étape consistant à convertir des données de guide de programme reçues suivant un format particulier en données de guide de programme suivant un format prédéterminé, et à transmettre les données de guide de programme converties audit dispositif d'utilisateur (30, 32, 34).

52. Procédé selon la revendication 50 ou 51, comprenant en outre l'étape consistant à transmettre le flux de données à un débit parmi une pluralité de débits binaires, en réponse à une demande reçue.

53. Procédé selon l'une quelconque des revendications 50, 51 ou 52, comprenant en outre l'étape consistant à transmettre, conformément à une demande reçue, une clé de décryptage de description qui est nécessaire pour reproduire le flux de données audit dispositif d'utilisateur (30, 32, 34) alors qu'une clé de décryptage de description n'est normalement pas transmise.

54. Dans un dispositif de mémorisation (20, 21, 24) qui peut être connecté à une pluralité de dispositifs d'acquisition de flux de données (10, 11, 14) et à une pluralité de dispositifs d'utilisateurs (30, 32, 34) par le biais d'un réseau local (5), procédé d'enregistrement et de fourniture d'un flux de données, ledit procédé comprenant les étapes consistant à :
diffuser pour lesdits dispositifs d'utilisateurs (30, 32, 34), lorsque ledit dispositif de mémorisation (20, 21, 24) se connecte la première fois au réseau local, un paquet d'annonce comprenant des informations de dispositif concernant des fonctions dudit dispositif de mémorisation,
recevoir une instruction de recherche d'un dit dispositif d'utilisateur (30, 32, 34) et transmettre ensuite une réponse contenant les informations de dispositif concernant des fonctions dudit dispositif de mémorisation,
enregistrer, en réponse à une demande reçue, un flux de données souhaité provenant d'un dit dispositif d'acquisition (10, 11, 14) sur un support d'enregistrement (220), lorsqu'il est déterminé qu'un flux de données peut être enregistré sur ledit support d'enregistrement, et
fournir, en réponse à une demande reçue, un flux de données enregistré sur ledit support d'enregistrement (220), suivant un format prédéterminé, à un dispositif parmi ladite pluralité de dispositifs d'utilisateurs (30, 32, 34).

55. Procédé selon la revendication 54, comprenant en outre les étapes consistant à :
accepter une nouvelle demande d'enregistrement, à moins que le nombre de flux de données qui peuvent être simultanément enregistrés ne dépasse un seuil, et
enregistrer simultanément une pluralité de flux de données sur ledit support d'enregistrement (220), conformément à une pluralité de demandes reçues.

56. Procédé selon la revendication 54 ou 55, comprenant en outre l'étape consistant à demander à un autre dispositif de mémorisation d'enregistrer une partie suivante du flux de données, par le biais dudit réseau local (5), lorsqu'il est déterminé qu'une quantité mémorisée dans ledit premier dispositif de mémorisation (20, 21, 24) atteint une limite au cours de l'enregistrement du flux de données.

57. Procédé selon la revendication 54, 55 ou 56, comprenant en outre l'étape consistant à recevoir une demande de réservation d'enregistrement conformément à la demande reçue.
